# EUROPEAN PATENT APPLICATION

(11) **EP 4 096 055 A1**
(43) Date of publication of application: **30.11.2022**
(21) Application number: 22175151.4
(22) Date of filing: 24.05.2022
(51) Int. Cl.: H02J 9/06, H02J 3/00, F24F 11/88, G06F 1/26, G06F 1/30

(54) **POWER SUPPLY SYSTEM OF AIR CONDITIONING DEVICE, AIR CONDITIONING DEVICE, AND DATA CENTER**

(30) Priority: 27.05.2021 CN 202110583921
(71) Applicant: Huawei Digital Power Technologies Co., Ltd., Shenzhen, Guangdong 518043 (CN)
(72) Inventor: PU, Mingming, Shenzhen, 518129 (CN); LIU, Peiguo, Shenzhen, 518129 (CN); MENG, Xiangtao, Shenzhen, 518129 (CN); FU, Mingxiao, Shenzhen, 518129 (CN); ZHANG, Yao, Shenzhen, 518129 (CN)
(74) Representative: Gill Jennings & Every LLP

(57) **Abstract**

This application discloses a power supply system of an air conditioning device, an air conditioning device, and a data center. The air conditioning device includes an alternating current bus, a direct current bus, a first alternating current/direct current AC/DC circuit, a first direct current/alternating current DC/AC circuit, and a backup power supply apparatus. The alternating current bus is connected to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit supplies power to a first air conditioning load. The backup power supply apparatus is connected to the direct current bus or the alternating current bus. The backup power supply apparatus provides electric energy for the direct current bus or the alternating current bus when the two power supplies are switched or fail, so that the first air conditioning load is not powered off. Regardless of how the two power supplies are switched, a connection relationship between the backup power supply apparatus and the load is not affected. Therefore, the backup power supply apparatus may supply power to the load when the two power supplies are switched or fail.

## Description

### TECHNICAL FIELD

This application relates to the field of electric power and electronics technologies, and in particular, to a power supply system of an air conditioning device, an air conditioning device, and a data center.

### BACKGROUND

At present, with development of science and technology, a large quantity of various devices are needed in various fields. The devices heat up during operating. To ensure normal operating of the devices, an air conditioning device is required to control operating ambient temperatures of the devices, so as to avoid a device damage caused by an excessively high temperature. For example, the field may be rail transit, a factory building, a commercial building, or a data center.

For example, a large amount of data in many industries needs to be processed and stored. Therefore, a data center becomes increasingly important. The data center includes many servers. A large amount of heat is generated when the servers are operating, and therefore computer room air conditioning (CRAC) is required to cool the servers, so that the servers can operate normally. Once the CRAC is powered off, the temperature in the equipment room increases rapidly, and the servers are prone to failure due to a high temperature.

Currently, a power supply system of an air conditioning device in most industries includes two power supplies, each of which includes one mains supply and one diesel generator. Both the mains supply and the diesel generator provide alternating current power. The two power supplies implement redundancy. In a normal case, the air conditioning device preferentially uses the mains supply to supply power. When the mains supply fails, the diesel generator is used to supply power. For example, a first power supply corresponds to a mains supply A and a diesel generator 1, and a second power supply corresponds to a mains supply B and a diesel generator 2. When the mains supply A corresponding to the first power supply runs out of power, the mains supply B corresponding to the second power supply is used to supply power. When both the mains supply A and the mains supply B run out of power, either diesel generator may supply power. In addition, to ensure continuous power supply to the CRAC when the alternating current power provided by the mains supplies and the diesel generators corresponding to the two power supplies runs out of power, a power supply system of the air conditioning device currently includes a battery and an uninterruptible power supply (UPS). When the alternating current power is off, the UPS may convert electric energy of the battery into alternating current power and provide the alternating current power to the CRAC. However, during actual operation, the UPS needs to be configured with a low-voltage power distribution cabinet and an output power distribution cabinet, leading to high overall costs. In addition, when the two power supplies are switched, the air conditioning device still has no power supply during the switching. In other words, the air conditioning device encounters a short-time power failure.

Therefore, the air conditioning device cannot operate normally during the power failure period, and a device requiring cooling may be shut down for protection due to an excessively high temperature, seriously affecting normal operating.

### SUMMARY

To resolve the foregoing technical problem, this application provides a power supply system of an air conditioning device, an air conditioning device, and a data center, to uninterruptedly supply power to computer room air conditioning when two power supplies that supply power to the computer room air conditioning are switched, thereby ensuring normal operating of the computer room air conditioning.

An embodiment of this application provides a power supply system of an air conditioning device, including an alternating current bus, a direct current bus, a first alternating current/direct current AC/DC circuit, a first direct current/alternating current DC/AC circuit, and a backup power supply apparatus. The alternating current bus is configured to connect to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to a first air conditioning load. The backup power supply apparatus is connected to the direct current bus or the alternating current bus. The backup power supply apparatus provides electric energy for the direct current bus or the alternating current bus when the two power supplies are switched or fail, so that the first air conditioning load is not powered off.

The power supply system provided in this embodiment of this application does not limit a quantity of air conditioning loads to which power is supplied, or limit a quantity of air conditioning devices to which power is supplied. A plurality of air conditioning devices may share a same power supply system, or each air conditioning device may correspond to a respective power supply system.

The backup power supply apparatus of the power supply system provided in this embodiment of this application is connected to a combined circuit formed after the two power supplies are switched. Therefore, regardless of how the two power supplies are switched or fail, a connection relationship between the backup power supply apparatus and the load of the air conditioning device is not affected. In other words, the backup power supply apparatus always keeps a connection with the load of the air conditioning device, and the connection is never broken. Therefore, when the two power supplies are switched or fail, the backup power supply apparatus can supply power to the load of the air conditioning device, even if the alternating current bus encounters a short-time power failure during switching between the two power supplies. However, supplying power to the load of the air conditioning device by the backup power supply apparatus is not affected. That the two power supplies are powered off means that neither of the two power supplies has alternating current power. Generally, each power supply includes one mains supply and one diesel generator.

This embodiment of this application imposes no limitation on whether the backup power supply apparatus is connected to the direct current bus or the alternating current bus. The following separately describes two implementations.

First implementation: The backup power supply apparatus is connected to the direct current bus. The backup power supply apparatus includes a battery pack and a bidirectional direct current/direct current circuit. A first terminal of the bidirectional direct current/direct current circuit is connected to the direct current bus, and a second terminal of the bidirectional direct current/direct current circuit is connected to the battery pack. The bidirectional direct current/direct current circuit is configured to convert a voltage of the battery pack into a voltage matching the first air conditioning load, and is further configured to convert a voltage of the direct current bus into a voltage matching the battery pack to charge the battery pack. When the backup power supply apparatus includes the bidirectional direct current/direct current circuit, specifications of the battery pack may be flexibly selected. Even if the voltage of the battery pack does not match the voltage of the direct current bus, the voltage of the battery pack may be converted into a voltage matching the direct current bus for discharging through the bidirectional direct current/direct current circuit. Alternatively, the voltage of the direct current bus is converted into the voltage matching the battery pack for charging.

It should be understood that, when the backup power supply apparatus is connected to the direct current bus, the bidirectional direct current/direct current circuit may alternatively not be included.

Second implementation: The backup power supply apparatus is connected to the alternating current bus. The backup power supply apparatus includes a battery pack and a bidirectional alternating current/direct current circuit. An input terminal of the bidirectional alternating current/direct current circuit is connected to the alternating current bus, and an output terminal of the bidirectional alternating current/direct current circuit is connected to the battery pack. The bidirectional alternating current/direct current circuit is configured to convert alternating current power of the alternating current bus into direct current power to charge the battery pack, and is further configured to convert a voltage of the battery pack into a voltage matching the alternating current bus to supply power to the first air conditioning load.

In a possible implementation, the power supply system includes a plurality of AC/DC circuits; in other words, a second AC/DC circuit is further included. An input terminal of the second AC/DC circuit is connected to the alternating current bus, and an output terminal of the second AC/DC circuit is connected to the direct current bus. When the plurality of AC/DC circuits are connected in parallel between the alternating current bus and the direct current bus, a subsequent loading capability of the direct current bus may be increased; in other words, more air conditioning loads can be connected. In this embodiment of this application, a quantity of AC/DC circuits connected in parallel between the direct current bus and the alternating current bus is not limited. More AC/DC circuits are mainly used to facilitate expansion of more loads or expansion of more air conditioners. When the power supply system has a strong loading capability, it is not limited whether the plurality of loads connected to the power supply system are located in one physical air conditioner or in a plurality of different physical air conditioners.

In addition, the power supply system provided in this embodiment of this application may alternatively include a plurality of DC/AC circuits, for example, further include a second DC/AC circuit. An input terminal of the second DC/AC circuit is connected to the direct current bus, and an output terminal of the second DC/AC circuit is configured to supply power to a second air conditioning load. To ensure power supply independence, one air conditioning load corresponds to one DC/AC circuit. In other words, the plurality of air conditioning loads are in a one-to-one correspondence with the plurality of DC/AC circuits.

In a possible implementation, each DC/AC circuit may alternatively supply power to the plurality of air conditioning loads. In other words, an output terminal of the first DC/AC circuit is configured to supply power to at least two first air conditioning loads, for example, to supply power to two compressors.

In a possible implementation, the first air conditioning load and the second air conditioning load each may include a fan, a compressor, or a pump.

In a possible implementation, direct current buses in power supply systems corresponding to a plurality of air conditioning devices may be connected together. It is alternatively possible that the plurality of air conditioning devices may share a same direct current bus.

In a possible implementation, the power supply system provided in this embodiment of this application may include or may not include a switching circuit. When the switching circuit is not included, the power supply system is connected to an external switching circuit. The switching circuit includes a first branch and a second branch. A first terminal of the first branch is configured to connect to a first power supply of the two power supplies, and a first terminal of the second branch is configured to connect to a second power supply of the two power supplies. A second terminal of the first branch and a second terminal of the second branch are connected together to connect to the alternating current bus. A switching device is connected in series on both the first branch and the second branch, and the switching devices are configured to switch the first power supply and the second power supply. To implement redundant power supply, the first power supply and the second power supply each include a respective mains and a diesel generator. In other words, the first power supply includes a first mains supply and a first diesel generator, and the second power supply includes a second mains supply and a second diesel generator.

In a possible implementation, the first power supply includes the first mains supply and the first diesel generator, and the second power supply includes the second mains supply and the second diesel generator. The power supply system further includes first automatic transfer switching equipment ATS and second automatic transfer switching equipment ATS. The first terminal of the first branch is connected to the first power supply through the first ATS, where a first input terminal of the first ATS is configured to connect to the first mains supply, a second input terminal of the first ATS is configured to connect to the first diesel generator, and an output terminal of the first ATS is connected to the first terminal of the first branch. The first terminal of the second branch is connected to the second power supply through the second ATS, where a first input terminal of the second ATS is configured to connect to the second mains supply, a second input terminal of the second ATS is configured to connect to the second diesel generator, and an output terminal of the second ATS is connected to the first terminal of the second branch.

In a possible implementation, to make the power supply system provided in this embodiment of this application compatible with a conventional power supply system, the power supply system provided in this embodiment of this application further includes: first automatic transfer switching equipment ATS, second automatic transfer switching equipment ATS, a low-voltage power distribution cabinet, an output power distribution cabinet, a battery, and an uninterruptible power supply circuit. The first terminal of the first branch is connected to the first power supply through the first ATS, where the first input terminal of the first ATS is configured to connect to the first mains supply, the second input terminal of the first ATS is configured to connect to the first diesel generator, and the output terminal of the first ATS is connected to the first terminal of the first branch. The first terminal of the second branch is connected to the second power supply through the second ATS, where the first input terminal of the second ATS is configured to connect to the second mains supply, and the second input terminal of the second ATS is configured to connect to the second diesel generator. The output terminal of the second ATS is connected to an input terminal of the low-voltage power distribution cabinet. An output terminal of the low-voltage power distribution cabinet is connected to a first terminal of the uninterruptible power supply circuit, a second terminal of the uninterruptible power supply circuit is connected to an input terminal of the output power distribution cabinet, an output terminal of the output power distribution cabinet is connected to the first terminal of the second branch, and a third terminal of the uninterruptible power supply circuit is connected to the battery.

In a possible implementation, to make the power supply system provided in this embodiment of this application compatible with the conventional power supply system, the power supply system provided in this embodiment of this application further includes: first automatic transfer switching equipment ATS, second automatic transfer switching equipment ATS, a first low-voltage power distribution cabinet, a first output power distribution cabinet, a first battery, a first uninterruptible power supply circuit, a second low-voltage power distribution cabinet, a second output power distribution cabinet, a second battery, and a second uninterruptible power supply circuit. The first terminal of the first branch is connected to the first power supply through the first ATS, where the first input terminal of the first ATS is configured to connect to the first mains supply, and the second input terminal of the first ATS is configured to connect to the first diesel generator. The first terminal of the second branch is connected to the second power supply through the second ATS, where the first input terminal of the second ATS is configured to connect to the second mains supply, and the second input terminal of the second ATS is configured to connect to the second diesel generator. The output terminal of the first ATS is connected to an input terminal of the first low-voltage power distribution cabinet, an output terminal of the first low-voltage power distribution cabinet is connected to a first terminal of the first uninterruptible power supply circuit, a second terminal of the first uninterruptible power supply circuit is connected to an input terminal of the first output power distribution cabinet, an output terminal of the first output power distribution cabinet is connected to the first terminal of the first branch, and a third terminal of the first uninterruptible power supply circuit is connected to the first battery. The output terminal of the second ATS is connected to an input terminal of the second low-voltage power distribution cabinet, an output terminal of the second low-voltage power distribution cabinet is connected to a first terminal of the second uninterruptible power supply circuit, a second terminal of the second uninterruptible power supply circuit is connected to an input terminal of the second output power distribution cabinet, an output terminal of the second output power distribution cabinet is connected to the first terminal of the second branch, and a third terminal of the second uninterruptible power supply circuit is connected to the second battery.

Based on the power supply system provided in the foregoing embodiment, an embodiment of this application further provides an air conditioning device. The interior of the air conditioning device integrates a power supply system and an air conditioning load. To be specific, the air conditioning device includes an alternating current bus, a direct current bus, a first alternating current/direct current AC/DC circuit, a first direct current/alternating current DC/AC circuit, a backup power supply apparatus, and a first air conditioning load. The alternating current bus is configured to connect to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to the first air conditioning load. The backup power supply apparatus is connected to the direct current bus or the alternating current bus. The backup power supply apparatus is configured to provide electric energy for the direct current bus or the alternating current bus when the two power supplies are switched or fail, so that the first air conditioning load is not powered off.

Advantages of the foregoing implementations of the power supply system are applicable to each implementation of the air conditioning device, and details are not described herein again. In addition, because the backup power supply apparatus and the power supply system are integrated into the air conditioning device, such an integrated design makes a layout of the air conditioning device more flexible, without considering a connection or cabling with an external backup power supply.

In a possible implementation, the backup power supply apparatus is specifically connected to the direct current bus. The backup power supply apparatus includes a battery pack and a bidirectional direct current/direct current circuit. A first terminal of the bidirectional direct current/direct current circuit is connected to the direct current bus, and a second terminal of the bidirectional direct current/direct current circuit is connected to the battery pack. The bidirectional direct current/direct current circuit is configured to convert a voltage of the battery pack into a voltage matching the first air conditioning load, and is further configured to convert a voltage of the direct current bus into a voltage matching the battery pack to charge the battery pack.

In a possible implementation, the backup power supply apparatus is specifically connected to the alternating current bus. The backup power supply apparatus includes a battery pack and a bidirectional alternating current/direct current circuit. An input terminal of the bidirectional alternating current/direct current circuit is connected to the alternating current bus, and an output terminal of the bidirectional alternating current/direct current circuit is connected to the battery pack. The bidirectional alternating current/direct current circuit is configured to convert alternating current power of the alternating current bus into direct current power to charge the battery pack, and is further configured to convert a voltage of the battery pack into a voltage matching the alternating current bus to supply power to the first air conditioning load.

In a possible implementation, the air conditioning device further includes a second AC/DC circuit. An input terminal of the second AC/DC circuit is connected to the alternating current bus, and an output terminal of the second AC/DC circuit is connected to the direct current bus.

In a possible implementation, the air conditioning device further includes a second DC/AC circuit. An input terminal of the second DC/AC circuit is connected to the direct current bus, and an output terminal of the second DC/AC circuit is configured to supply power to a second air conditioning load.

In a possible implementation, the first air conditioning load includes a fan, a compressor, or a pump.

In a possible implementation, the output terminal of the first DC/AC circuit is configured to supply power to at least two first air conditioning loads.

In a possible implementation, the switching circuit includes a first branch and a second branch. A first terminal of the first branch is configured to connect to a first power supply of the two power supplies, and a first terminal of the second branch is configured to connect to a second power supply of the two power supplies. A second terminal of the first branch and a second terminal of the second branch are connected together to connect to the alternating current bus. A corresponding switching device is connected in series on both the first branch and the second branch, and the switching devices are configured to switch the first power supply and the second power supply.

The interior of the air conditioning device provided in the foregoing embodiment integrates all components of the power supply system. In another implementation, the interior of the air conditioning device does not include the backup power supply apparatus. The backup power supply apparatus may be disposed outside a cabinet of the air conditioning device, and may be connected to the direct current bus or the alternating current bus inside the air conditioning device. An embodiment of this application further provides an air conditioning device, including an alternating current bus, a direct current bus, a first alternating current/direct current AC/DC circuit, a first direct current/alternating current DC/AC circuit, and a first air conditioning load. The alternating current bus is configured to connect to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to the first air conditioning load. The direct current bus or the alternating current bus is connected to a backup power supply apparatus. The backup power supply apparatus is configured to provide electric energy for the direct current bus or the alternating current bus when the two power supplies are switched or fail, so that the first air conditioning load is not powered off.

An embodiment of this application further provides a data center, including an air conditioning device and the foregoing power supply system. The air conditioning device includes an air conditioning load, and is configured to perform temperature control for the data center. The air conditioning load and the power supply system are separately disposed. The power supply system supplies power to the air conditioning load and is connected to the air conditioning load. When two power supplies are switched or fail, a power supply apparatus in the power supply system can uninterruptedly supply power to the air conditioning load.

An embodiment of this application further provides another data center, including an air conditioning device. A power supply system is integrated in the air conditioning device, and the interior of the power supply system includes a backup power supply apparatus. When the two power supplies are switched or fail, the power supply system can uninterruptedly supply power to the air conditioning load.

An embodiment of this application further provides another data center, including a backup power supply apparatus and an air conditioning device. The air conditioning device is configured to perform temperature control for the data center. In other words, the backup power supply apparatus is located outside the air conditioning device, the interior of the air conditioning device includes other components in a power supply system except the backup power supply apparatus, and the backup power supply apparatus is connected to a direct current bus or an alternating current bus of the power supply system inside the air conditioning device. When two power supplies are switched or fail, the backup power supply apparatus can uninterruptedly supply power to the air conditioning load.

An embodiment of this application further provides a power supply of an air conditioning device, including an alternating current bus, a direct current bus, a first alternating current/direct current AC/DC circuit, a first direct current/alternating current DC/AC circuit, and a backup power supply apparatus. The alternating current bus is configured to connect to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to a first air conditioning load. The backup power supply apparatus is connected to the direct current bus or the alternating current bus. The backup power supply apparatus is configured to provide electric energy for the direct current bus or the alternating current bus when the two power supplies are switched or fail, so that the first air conditioning load is not powered off.

In a possible implementation, the backup power supply apparatus is connected to the direct current bus. The backup power supply apparatus includes a battery pack and a bidirectional direct current/direct current circuit. A first terminal of the bidirectional direct current/direct current circuit is connected to the direct current bus, and a second terminal of the bidirectional direct current/direct current circuit is connected to the battery pack. The bidirectional direct current/direct current circuit is configured to convert a voltage of the battery pack into a voltage matching a load of computer room air conditioning, and is further configured to convert a voltage of the direct current bus into a voltage matching the battery pack to charge the battery pack.

In a possible implementation, the backup power supply apparatus is connected to the alternating current bus. The backup power supply apparatus includes a battery pack and a bidirectional alternating current/direct current circuit. An input terminal of the bidirectional alternating current/direct current circuit is connected to the alternating current bus, and an output terminal of the bidirectional alternating current/direct current circuit is connected to the battery pack. The bidirectional alternating current/direct current circuit is configured to convert alternating current power of the alternating current bus into direct current power to charge the battery pack, and is further configured to convert a voltage of the battery pack into a voltage matching the alternating current bus to supply power to the load of the computer room air conditioning.

In a possible implementation, the power supply further includes a second AC/DC circuit. An input terminal of the second AC/DC circuit is connected to the alternating current bus, and an output terminal of the second AC/DC circuit is connected to the direct current bus.

In a possible implementation, the power supply further includes a second DC/AC circuit. An input terminal of the second DC/AC circuit is connected to the direct current bus, and an output terminal of the second DC/AC circuit is configured to supply power to a second air conditioning load.

In a possible implementation, the output terminal of the first DC/AC circuit is configured to supply power to at least two first air conditioning loads.

In a possible implementation, the switching circuit includes a first branch and a second branch. A first terminal of the first branch is configured to connect to a first power supply of the two power supplies, and a first terminal of the second branch is configured to connect to a second power supply of the two power supplies. A second terminal of the first branch and a second terminal of the second branch are connected together to connect to the alternating current bus. A switching device is connected in series on both the first branch and the second branch, and the switching devices are configured to switch the first power supply and the second power supply.

In addition, an embodiment of this application further provides a power supply chassis of an air conditioning device, including an alternating current bus, a direct current bus, a first alternating current/direct current AC/DC circuit, a first direct current/alternating current DC/AC circuit, and a backup power supply apparatus. A first port of the power supply chassis is connected to a switching circuit, and a second port of the power supply chassis is connected to a first air conditioning load. The backup power supply apparatus includes at least a battery pack. The alternating current bus is configured to connect to two power supplies through the switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to the first air conditioning load. The backup power supply apparatus is connected to the direct current bus or the alternating current bus. The backup power supply apparatus is configured to provide electric energy for the direct current bus or the alternating current bus when the two power supplies are switched or fail, so that the first air conditioning load is not powered off.

The backup power supply apparatus is connected to the direct current bus. The backup power supply apparatus includes a battery pack and a bidirectional direct current/direct current circuit. A first terminal of the bidirectional direct current/direct current circuit is connected to the direct current bus, and a second terminal of the bidirectional direct current/direct current circuit is connected to the battery pack. The bidirectional direct current/direct current circuit is configured to convert a voltage of the battery pack into a voltage matching a load of computer room air conditioning, and is further configured to convert a voltage of the direct current bus into a voltage matching the battery pack to charge the battery pack.

The backup power supply apparatus is connected to the alternating current bus. The backup power supply apparatus includes a battery pack and a bidirectional alternating current/direct current circuit. An input terminal of the bidirectional alternating current/direct current circuit is connected to the alternating current bus, and an output terminal of the bidirectional alternating current/direct current circuit is connected to the battery pack. The bidirectional alternating current/direct current circuit is configured to convert alternating current power of the alternating current bus into direct current power to charge the battery pack, and is further configured to convert a voltage of the battery pack into a voltage matching the alternating current bus to supply power to the load of the computer room air conditioning.

A quantity of AC/DC circuits included in the power supply system is not specifically limited in this embodiment of this application. The power supply system may include one AC/DC circuit, or may include a plurality of AC/DC circuits. The AC/DC circuit is connected between the alternating current bus and the direct current bus. Therefore, when a plurality of AC/DC circuits are connected in parallel between the alternating current bus and the direct current bus, a current on the direct current bus may be increased and a loading capability of the direct current bus may be improved. If a quantity of air conditioning loads mounted on the direct current bus is large, a quantity of AC/DC circuits may be increased.

In addition, a quantity of DC/AC circuits included in the power supply system is not limited in this embodiment of this application. The power supply system may include one DC/AC circuit, or may include a plurality of DC/AC circuits. A person skilled in the art may set the quantity of DC/AC circuits based on the quantity of air conditioning loads. For example, one fan corresponds to one DC/AC circuit, one compressor corresponds to one DC/AC circuit, and one pump corresponds to one DC/AC circuit. In addition, if a driving capability of the DC/AC circuit is strong enough, one DC/AC circuit may correspond to a plurality of air conditioning loads, for example, one DC/AC circuit corresponds to a plurality of fans, a plurality of compressors, or a plurality of pumps. This is not specifically limited in this embodiment of this application.

This application has at least the following advantages:

The power supply system of the air conditioning device provided in this embodiment of this application includes the backup power supply apparatus. When the two power supplies connected to the air conditioning device normally supply power, the battery pack in the backup power supply apparatus may be charged. When the two power supplies are switched, the backup power supply apparatus may discharge to supply power to the load of the air conditioning device. For example, the load of the air conditioning device may include a fan, a compressor, or a pump. The backup power supply apparatus of the power supply system provided in this embodiment of this application is connected to an alternating current bus or a direct current bus formed after the two power supplies that supply power to the air conditioning device are combined. In other words, the backup power supply apparatus is connected to a combined circuit formed after the two power supplies are switched. Therefore, regardless of how the two power supplies are switched, the connection relationship between the battery pack and the load of the air conditioning device is not affected. In other words, the backup power supply apparatus always keeps the connection with the load of the air conditioning device, and the connection is never broken. Therefore, when the two power supplies are switched, the backup power supply apparatus can supply power to the load of the air conditioning device, even if the alternating current bus encounters a short-time power failure during switching between the two power supplies. However, supplying power to the load of the air conditioning device by the backup power supply apparatus is not affected. In addition, in addition to supplying power to the load of the air conditioning device when the two power supplies are switched, the backup power supply apparatus may further supply power to the load of the air conditioning device when both power supplies are powered off. Therefore, the power supply system of the air conditioning device provided in this embodiment of this application may continuously supply power to the load of the air conditioning device, and avoid a situation in which power supply is interrupted for a short time when two power supplies are switched or fail. In this way, the load of the air conditioning device may operate normally, and further the temperature in the equipment room is normal.

### BRIEF DESCRIPTION OF DRAWINGS

FIG. 1A is a schematic diagram of a micro-modular data center according to an embodiment of this application;
FIG. 1B is an architectural diagram of a CRAC according to an embodiment of this application;
FIG. 2 shows an architecture of a conventional CRAC power supply system;
FIG. 3 is a schematic diagram of a power supply system of computer room air conditioning according to an embodiment of this application;
FIG. 4 is a schematic diagram of another power supply system of computer room air conditioning according to an embodiment of this application;
FIG. 5 is a schematic diagram of yet another power supply system of computer room air conditioning according to an embodiment of this application;
FIG. 6 is a schematic diagram of still another power supply system of computer room air conditioning according to an embodiment of this application;
FIG. 7A is a schematic diagram of still another power supply system of computer room air conditioning according to an embodiment of this application;
FIG. 7B-1 and FIG. 7B-2 are a schematic diagram of a power supply system of a plurality of sets of parallel computer room air conditioning according to an embodiment of this application;

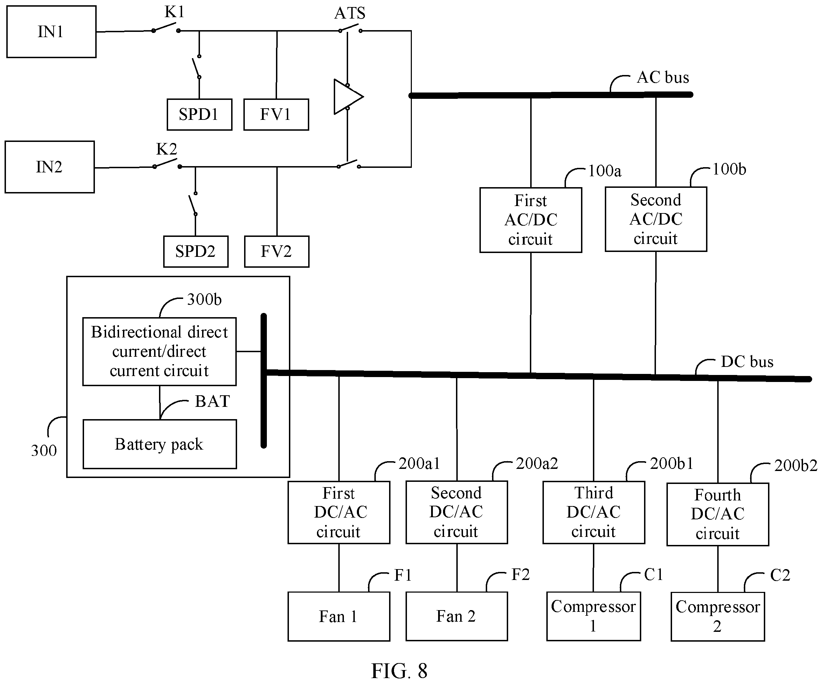

FIG. 8 is a schematic diagram of yet another power supply system of computer room air conditioning according to an embodiment of this application;

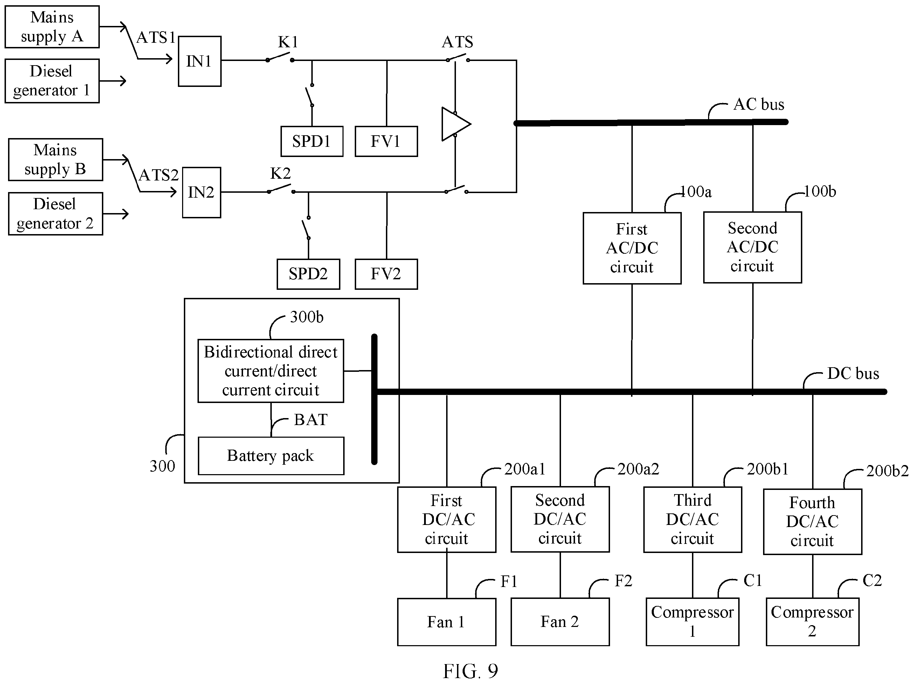

FIG. 9 is a schematic diagram of another power supply system of computer room air conditioning according to an embodiment of this application;

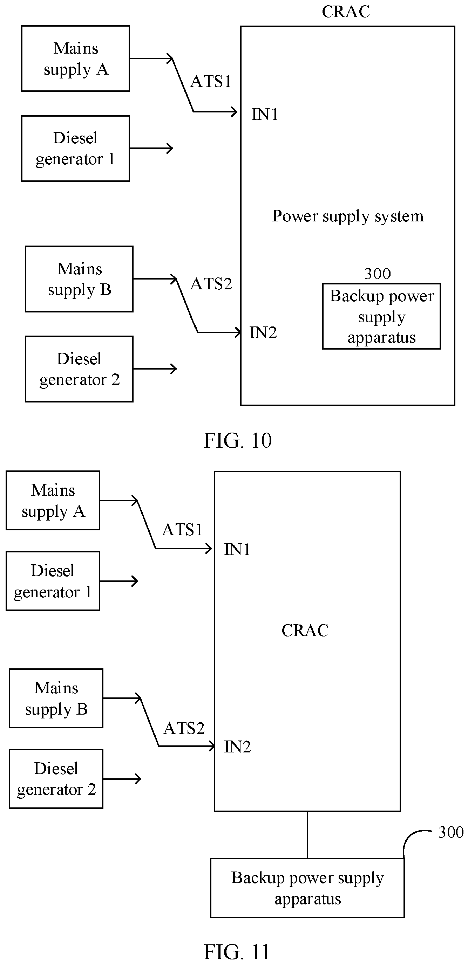

FIG. 10 is a schematic diagram in which a backup power supply apparatus in a power supply system is integrated inside a CRAC according to an embodiment of this application;
FIG. 11 is a schematic diagram in which a backup power supply apparatus in a power supply system is disposed outside a CRAC according to an embodiment of this application;

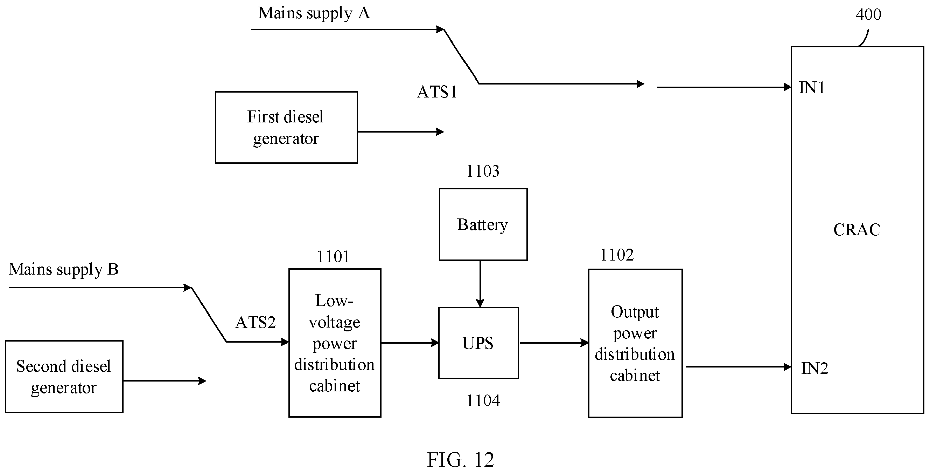

FIG. 12 is a schematic diagram of yet another power supply system of computer room air conditioning according to an embodiment of this application;

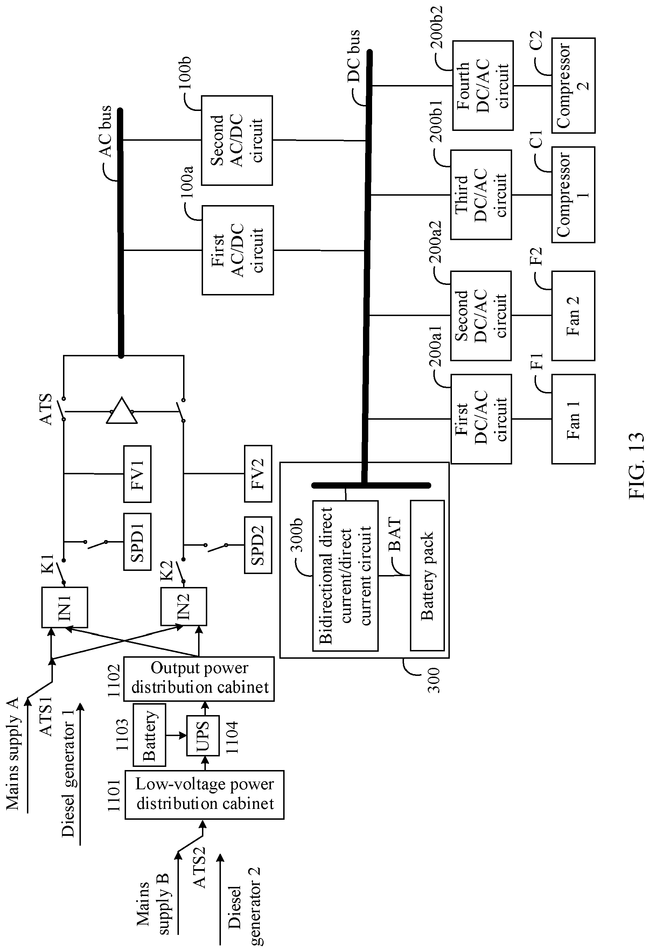

FIG. 13 is a schematic diagram of another power supply system of computer room air conditioning according to an embodiment of this application;

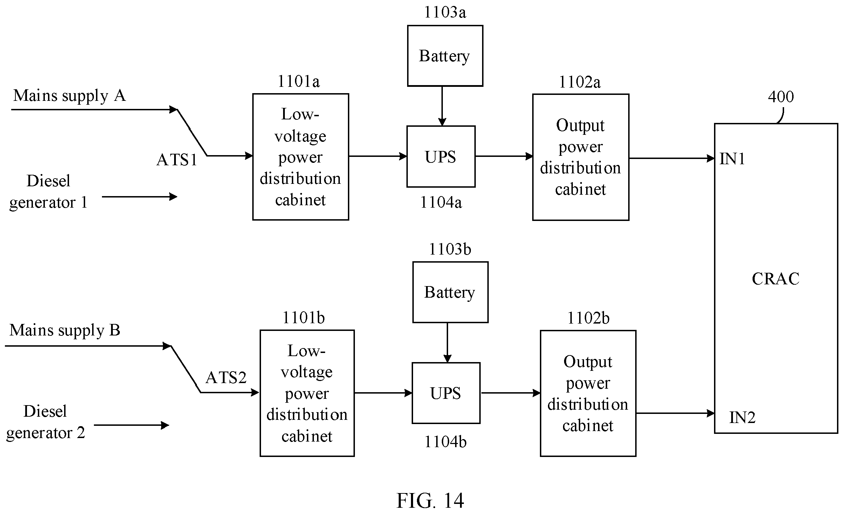

FIG. 14 is a schematic diagram of still another power supply system of computer room air conditioning according to an embodiment of this application;

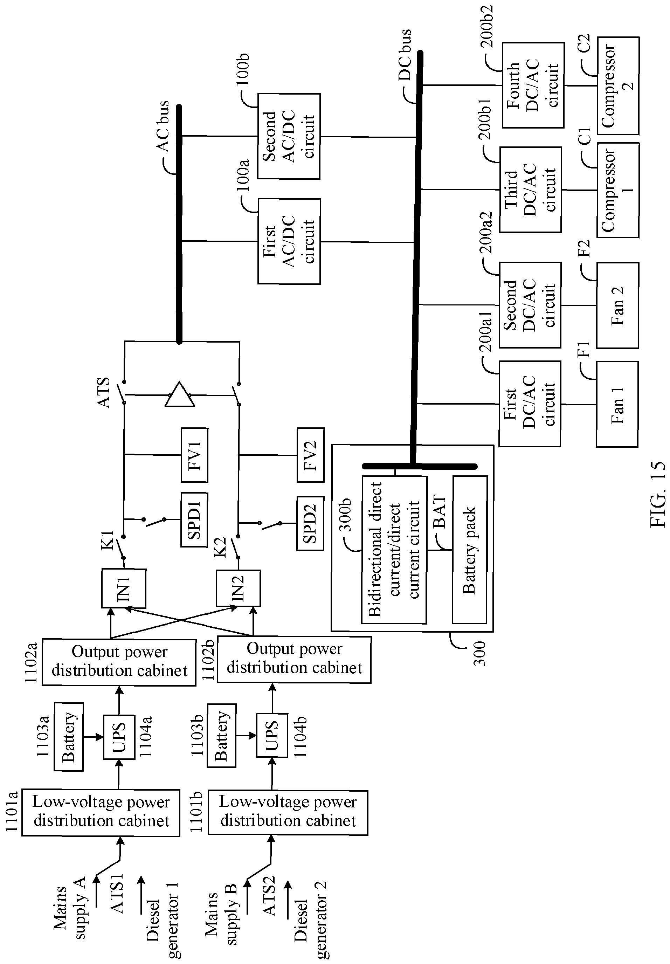

FIG. 15 is a schematic diagram of yet another power supply system of computer room air conditioning according to an embodiment of this application; and

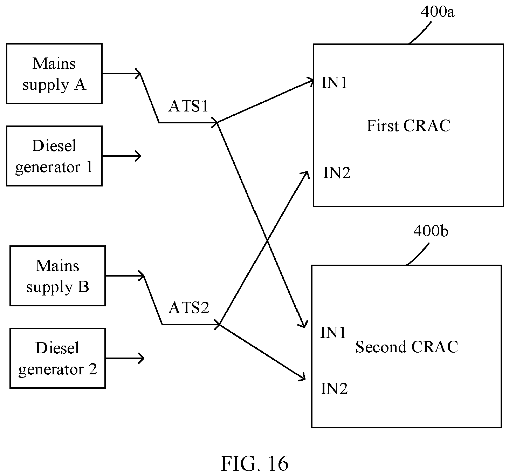

FIG. 16 is an architectural diagram corresponding to two CRACs according to an embodiment of this application.

### DESCRIPTION OF EMBODIMENTS

The following describes the technical solutions in embodiments of this application with reference to the accompanying drawings in embodiments of this application.

The following terms "first", "second", and the like are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of' means two or more than two.

In this application, it should be noted that the term "connection" should be understood in a broad sense unless otherwise expressly specified and limited. For example, the "connection" may be a fixed connection, or may be a detachable connection, or may be an integral connection; may be a direct connection, or may be an indirect connection implemented by using a medium. In addition, the term "coupled" may be a manner of implementing an electrical connection for signal transmission. The "coupling" may be a direct electrical connection, or may be an indirect electrical connection through an intermediate medium.

This embodiment of this application relates to a power supply system of an air conditioning device. The power supply system includes a backup power supply apparatus, and the backup power supply apparatus includes a battery pack. The battery pack is connected to a path formed after two circuits are combined, and therefore the battery pack may be connected to an alternating current bus or connected to a direct current bus. When two power supplies are switched or fail, a connection relationship between the battery pack and an air conditioning load is not affected. Therefore, the battery pack may continue to supply power to the air conditioning load when two circuits connected to the air conditioning device are switched or fail.

This embodiment of this application does not limit an application scenario of the air conditioning device. The scenario may be any scenario in which temperature control is needed, for example, rail transit, a factory building, a commercial building, and a data center. The following uses an example in which an application scenario is a data center for description. An air conditioning device corresponding to the data center may be referred to as a CRAC. The power supply system provided in this embodiment of this application may be applied to any scenario in which power needs to be uninterruptedly supplied to the CRAC. An application scenario of the data center is not limited.

The data center generally includes a plurality of servers. The servers emit heat during operating. The servers may be shut down for protection due to an excessively high temperature, severely affecting the normal operating of the data center. Therefore, the CRAC needs to cool the servers in the data center. In this embodiment of this application, a physical form of the data center is not specifically limited. For example, the data center may be micro-modular, or may be prefabricated. The following describes a data center in the micro-modular form with reference to accompanying drawings.

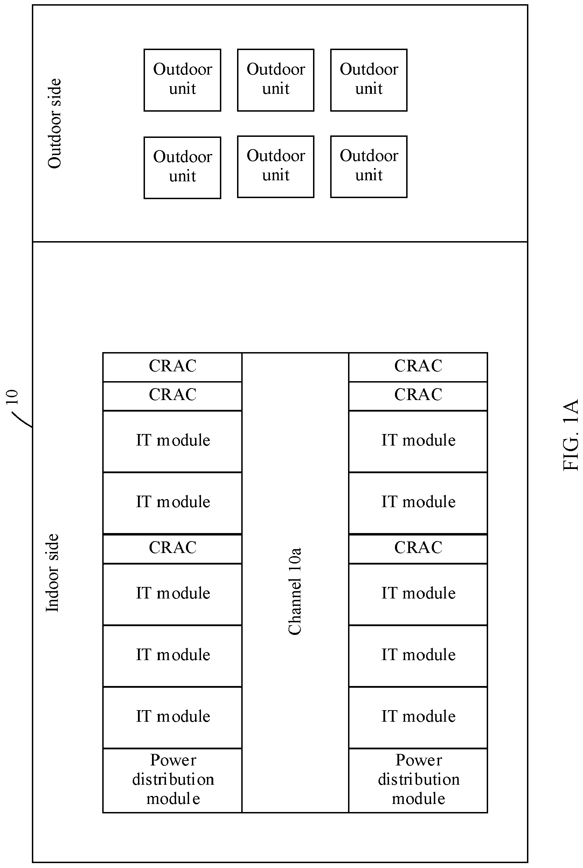

FIG. 1A is a schematic diagram of a micro-modular data center according to an embodiment of this application.

A micro-modular data center 10 generally includes an indoor side and an outdoor side, where the indoor side includes IT modules, CRACs, and power distribution modules. The outdoor side includes an air conditioning outdoor unit. The IT modules include servers and server racks.

FIG. 1A is merely a schematic diagram of an internal architecture of a data center. A quantity of IT modules and a quantity of air conditioners are not specifically limited in this embodiment of this application. A person skilled in the art sets the quantity based on an actual requirement. For example, a quantity of air conditioners may be set based on a quantity of IT modules and a temperature requirement. Specifically, the quantity of air conditioners may be set by performing a temperature simulation test.

When the CRACs work, an air outlet direction of an air outlet of each CRAC faces to a middle channel 10a, and a lower part of the middle channel 10a is connected to the outdoor unit through a pipe for air circulation.

The power supply system provided in this embodiment of this application may be integrated inside the CRAC. Because the power supply system may supply power to a load of the CRAC when the two power supplies are switched or fail, a UPS and a battery of the power distribution module may mainly supply power to the server and another module in the IT module. The CRAC is connected to only two power supplies of the power distribution module, making a layout of the CRAC more flexible and routing more simplified. In addition, electric energy of the battery in the power distribution module can be used to supply power to more IT modules. In other words, because the power distribution module does not need to supply power to the CRAC, when the power distribution module supplies power to the same quantity of IT modules, a quantity of batteries can be reduced, thereby reducing occupied space. In this way, the internal architecture of the entire data center may be simplified and costs may be reduced. Each power supply includes one mains supply and one diesel generator. Due to a large size, the diesel generator is usually located outside the data center.

To enable a person skilled in the art to better understand the power supply system of the air conditioning device provided in this embodiment of this application, the following first describes an architecture of the air conditioning device.

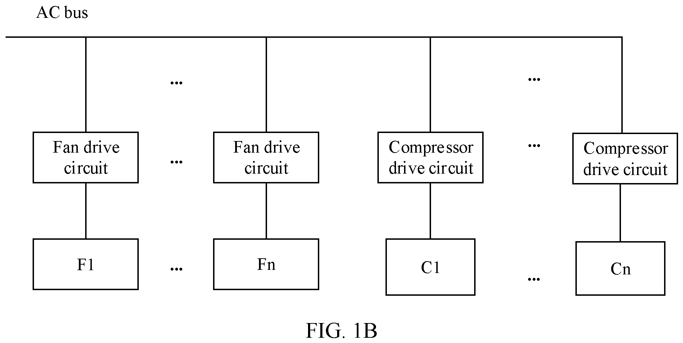

FIG. 1B is an architectural diagram of an air conditioning device according to an embodiment of this application.

The air conditioning device provided in this embodiment of this application may include one or more air conditioning loads (which are briefly referred to as loads hereinafter). Generally, the air conditioning load may be a fan, a compressor, or a pump. For example, the air conditioning load of the air conditioning device may include one fan or one compressor, may include one fan and one pump, or may include two fans and two compressors. This is not specifically limited in this application.

When there are a plurality of air conditioning loads in this embodiment of this application, the air conditioning loads may be located inside one air conditioning device, or may be respectively located inside different air conditioning devices. This is not specifically limited. This embodiment of this application focuses on uninterruptible power supply to the air conditioning load. A bearing form of a physical device of the air conditioning load is not limited, and a person skilled in the art may set the bearing form based on an actual requirement. For example, one air conditioning device may have one air conditioning load, or may have a plurality of air conditioning loads. The air conditioning loads powered by the power supply system may be distributed in one air conditioning device, or may be distributed in a plurality of air conditioning devices. For example, the power supply system may supply power to air conditioning loads in a plurality of air conditioning devices, or may supply power to air conditioning loads in one air conditioning device. Alternatively, the power supply system may supply power to some air conditioning loads in one air conditioning device, and the remaining air conditioning loads are powered by another power supply system, provided that the air conditioning loads are powered uninterruptedly.

As shown in FIG. 1B, the air conditioning loads of the air conditioning device include n fans, which are fans F1 to Fn respectively, and further include n compressors, which are C1 to Cn respectively, where n is an integer greater than or equal to 2. It should be understood that a quantity of fans and a quantity of compressors may be equal or unequal. This is not specifically limited in this embodiment of this application. Generally, the fan and the compressor correspond to their own drive circuits, and the drive circuit converts a voltage of an alternating current bus AC bus into a voltage required by the fan and the compressor.

To highlight advantages of the power supply system of the air conditioning device provided in this embodiment of this application, the following first describes an architecture of a conventional power supply system of an air conditioning device.

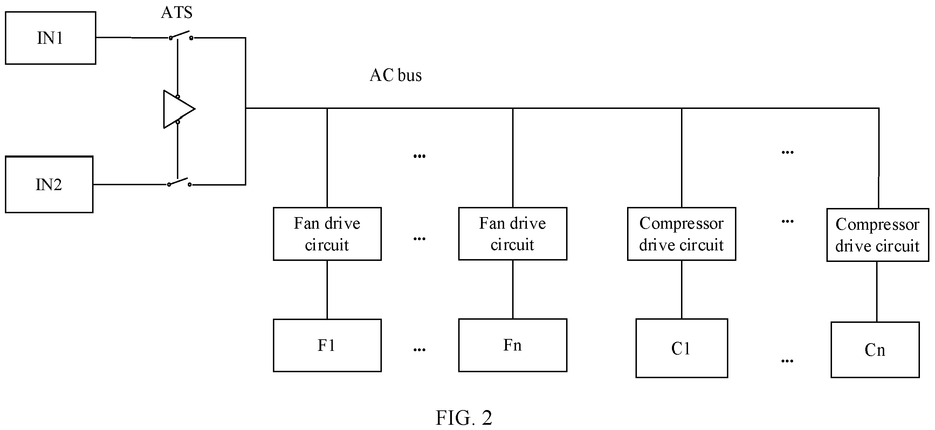

FIG. 2 is an architectural diagram of a conventional power supply system of an air conditioning device.

To ensure uninterruptible power supply to the air conditioning device as much as possible, two power supplies are usually set, namely, a first power supply IN1 and a second power supply IN2.

Normally, both the first power supply IN1 and the second power supply IN2 have power. The first power supply IN1 is connected to the alternating current bus AC bus or the second power supply IN2 is connected to the alternating current bus AC bus by controlling switching of automatic transfer switching equipment (ATS). In other words, the first power supply IN1 or the second power supply IN2 is selected to supply power to a fan and a compressor. However, during the switching of the ATS, the power supply to the fan and the compressor is interrupted at the moment of the switching. The compressor has a startup time requirement, and internal power-off protection logic is set. Therefore, once the compressor is powered off and restarted, the compressor cannot start to work immediately. Instead, the compressor can start to work normally only after a specified startup time elapses. Therefore, once the power supply is interrupted, the compressor does not work for a period of time. In this case, if the temperature in the equipment room increases rapidly, a server cannot operate normally, or even the server is damaged due to an excessively high temperature.

To resolve a technical problem that a short-time power supply interruption is caused by switching between the two power supplies, an embodiment of this application provides a power supply system of an air conditioning device, where a backup power supply apparatus is connected to a combined circuit formed after the two power supplies are switched. The backup power supply apparatus includes a battery pack. In other words, the battery pack may supply power to the fan and the compressor. During the switching between the two power supplies, the battery pack is not disconnected from an air conditioning load. In other words, the battery pack is always connected to a power supply path of the air conditioning load, and therefore may supply power to the air conditioning load at any time. Even if the two power supplies are switched, the power supply to the air conditioning load is not affected; in other words, there is no short-time power supply interruption. In addition, when both the power supplies are powered off, the power supply system provided in this embodiment of this application may continue to supply power to the air conditioning load.

Therefore, the air conditioning load (for example, the fan and the compressor) may be continuously supplied with power, thereby ensuring that an ambient temperature is controllable and the server operates safely.

It may be understood that the air conditioning device in this embodiment of this application may be applied to each scenario in which temperature control is required. Generally, the air conditioning device may include a fan, a compressor, a pump, or the like. Internal architectures may be different in different application scenarios, but power supply systems of air conditioners may be the same. To ensure that the air conditioning load continuously runs, the power supply system provided in this embodiment of this application is required. To enable a person skilled in the art to better understand a working principle of the power supply system, the following uses a CRAC merely as an example for description. Power supply to an air conditioning device in another application scenario is similar. The power supply system of the air conditioning device provided in this embodiment includes an alternating current bus, a direct current bus, a first alternating current/direct current AC/DC circuit, a first direct current/alternating current DC/AC circuit, and a backup power supply apparatus. The backup power supply apparatus includes at least a battery pack. The alternating current bus is configured to connect to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to at least one first load of the computer room air conditioning. The backup power supply apparatus is connected to the direct current bus or the alternating current bus. The backup power supply apparatus is configured to provide electric energy for the direct current bus or the alternating current bus when the two power supplies are switched or fail, so that the first load of the computer room air conditioning is not powered off.

It should be understood that a quantity of AC/DC circuits included in the power supply system is not specifically limited in this embodiment of this application. The power supply system may include one AC/DC circuit, or may include a plurality of AC/DC circuits. The AC/DC circuit is connected between the alternating current bus and the direct current bus. Therefore, when a plurality of AC/DC circuits are connected in parallel between the alternating current bus and the direct current bus, a current on the direct current bus may be increased and a loading capability of the direct current bus may be improved. If a quantity of air conditioning loads mounted on the direct current bus is large, a quantity of AC/DC circuits may be increased.

In addition, a quantity of DC/AC circuits included in the power supply system is not limited in this embodiment of this application. The power supply system may include one DC/AC circuit, or may include a plurality of DC/AC circuits. A person skilled in the art may set the quantity of DC/AC circuits based on the quantity of air conditioning loads. For example, one fan corresponds to one DC/AC circuit, one compressor corresponds to one DC/AC circuit, and one pump corresponds to one DC/AC circuit. In addition, if a driving capability of the DC/AC circuit is strong enough, one DC/AC circuit may correspond to a plurality of air conditioning loads, for example, one DC/AC circuit corresponds to a plurality of fans, a plurality of compressors, or a plurality of pumps. This is not specifically limited in this embodiment of this application.

To enable a person skilled in the art to better understand the working principle of the power supply system provided in this embodiment of this application, the following uses an example in which the power supply system includes one DC/AC circuit and one AC/DC circuit for description. In addition, for example, one DC/AC circuit supplies power to a load of one air conditioning device. A quantity of air conditioning loads in the air conditioning device is not limited, and there may be one air conditioning load or a plurality of air conditioning loads.

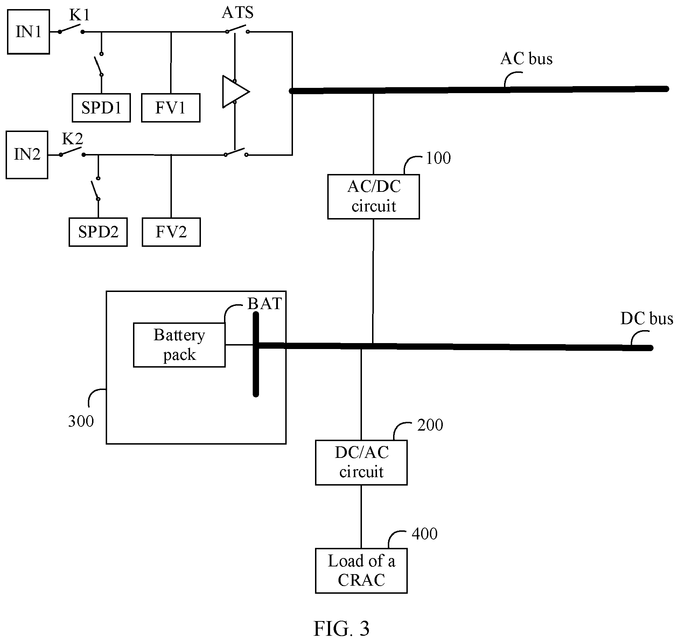

FIG. 3 is a schematic diagram of a power supply system of a CRAC according to an embodiment of this application.

The power supply system of the CRAC provided in this embodiment of this application includes an alternating current bus AC bus, a direct current bus DC bus, an alternating current/direct current (AC/DC) circuit 100, a direct current/alternating current (DC/AC) circuit 200, and a backup power supply apparatus 300.

The alternating current bus AC bus is configured to connect to two power supplies through a switching circuit.

An input terminal of the AC/DC circuit 100 is connected to the alternating current bus AC bus, and an output terminal of the AC/DC circuit 100 is connected to the direct current bus DC bus.

An input terminal of the DC/AC circuit 200 is connected to the direct current bus DC bus, and an output terminal of the DC/AC circuit 200 is configured to supply power to the load of the CRAC.

In FIG. 3, an example in which the output terminal of the DC/AC circuit 200 is configured to supply power to a load 400 of the CRAC is used for description. It should be understood that, for example, one CRAC may include a plurality of air conditioning loads, for example, include a plurality of compressors and a plurality of fans. The output terminal of the DC/AC circuit 200 is configured to supply power to one or more loads of one CRAC. To enable the CRAC to operate normally when the two power supplies are switched or fail, the output terminal of the DC/AC circuit 200 supplies power to the load 400 of the CRAC in FIG. 3; in other words, supplies power to all loads inside the CRAC.

The backup power supply apparatus 300 may be connected to the direct current bus DC bus, or may be connected to the alternating current bus AC bus. In FIG. 3, an example in which the backup power supply apparatus 300 is connected to the direct current bus DC bus is used for description.

The backup power supply apparatus 300 is configured to: when the two power supplies are switched or fail, use stored backup electric energy to provide electric energy for the direct current bus DC bus or the alternating current bus AC bus, so that the load of the CRAC is not powered off. In some embodiments, the backup power supply apparatus 300 may include at least a battery pack BAT for storing electric energy. Certainly, in another embodiment, the backup power supply apparatus 300 may alternatively store electric energy in another manner. The following mainly uses the battery pack BAT as an example for description. However, an energy storage form of the battery pack is not limited in this application.

That the two power supplies are powered off means that the two power supplies run out of power. For example, two mains supplies and two diesel generators all run out of power. This may be caused by a fault or power failure. In other words, neither power supply can provide alternating current power.

The battery pack needs to be charged by direct current power. Therefore, when the backup power supply apparatus 300 is connected to the direct current bus DC bus, the interior of the backup power supply apparatus 300 may not include a power conversion circuit, for example, does not necessarily include a rectifier circuit.

A type of the battery pack in the backup power supply apparatus 300 is not limited in this embodiment of this application. The battery pack may be, for example, at least one of the following: a lead-acid battery, a lithium battery, a supercapacitor, or the like.

In this embodiment of this application, a voltage on the direct current bus DC bus is not specifically limited. For example, the voltage may be between 700 V and 800 V, and may be set based on a specific scenario.

This embodiment of this application imposes no limitation on whether the AC/DC circuit 100 includes one-stage power conversion or two-stage power conversion, and similarly, imposes no limitation on whether the DC/AC circuit 200 includes one-stage power conversion or two-stage power conversion.

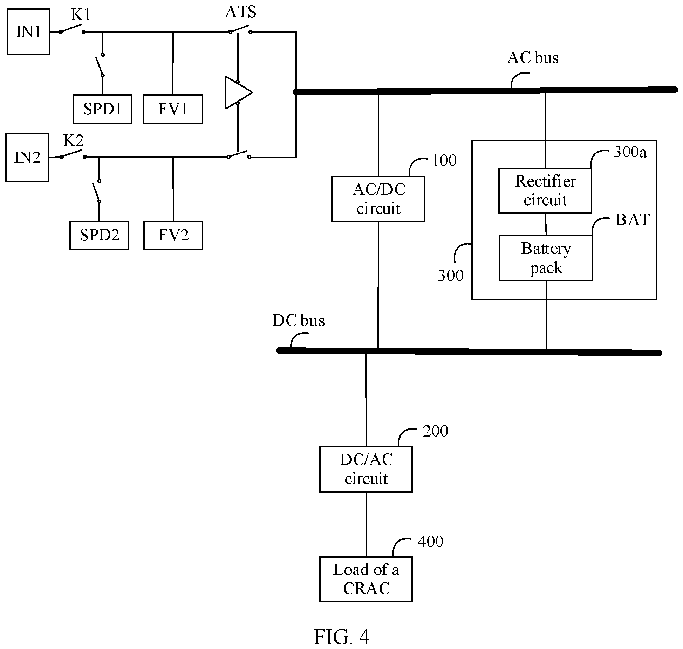

When the backup power supply apparatus 300 is connected to the alternating current bus AC bus, the interior of the backup power supply apparatus 300 further needs to include a rectifier circuit. For details, refer to FIG. 4. FIG. 4 is a schematic diagram of still another power supply system of a CRAC according to an embodiment of this application.

A difference between FIG. 3 and FIG. 4 lies in that, FIG. 3 shows an example in which the backup power supply apparatus is connected to the direct current bus DC bus, and FIG. 4 shows an example in which the backup power supply apparatus is connected to the alternating current bus AC bus. Other parts in FIG. 3 and FIG. 4 are the same. For details, refer to the description of FIG. 3. The following describes only a part in FIG. 4 that is different from that in FIG. 3.

When the backup power supply apparatus 300 is connected to the alternating current bus AC bus, the interior of the backup power supply apparatus 300 further needs to include a bidirectional alternating current/direct current circuit 300a. An input terminal of the bidirectional alternating current/direct current circuit 300a is connected to the alternating current bus AC bus, and an output terminal of the bidirectional alternating current/direct current circuit 300a is connected to the battery pack BAT. The bidirectional alternating current/direct current circuit 300a is configured to convert alternating current power of the alternating current bus AC bus into direct current power to charge the battery pack BAT, and is further configured to convert a voltage of the battery pack BAT into a voltage matching the alternating current bus AC bus to supply power to the CRAC. In other words, the bidirectional alternating current/direct current circuit has two working modes: rectifier and inverter. When working in the rectifier mode, the bidirectional alternating current/direct current circuit is configured to convert the alternating current power of the alternating current bus AC bus into the direct current power to charge the battery. When working in the inverter mode, the bidirectional alternating current/direct current circuit is configured to convert the direct current power into the alternating current power, connect to the alternating current bus AC bus, and cooperate with the AC/DC circuit connected between the alternating current bus AC bus and the direct current bus DC bus to supply power to the air conditioning load.

In FIG. 4, an example in which the output terminal of the DC/AC circuit 200 is configured to supply power to a load 400 of one computer room air conditioning CRAC is used for description. It should be understood that, for example, one computer room air conditioning CRAC may include a plurality of air conditioning loads, for example, include a plurality of compressors and a plurality of fans. The output terminal of the DC/AC circuit 200 is configured to supply power to one or more loads of one CRAC. To enable the CRAC to operate normally when the two power supplies are switched or fail, the output terminal of the DC/AC circuit 200 supplies power to the load 400 of the CRAC in FIG. 4; in other words, supplies power to all loads inside the CRAC.

This embodiment of this application imposes no limitation on whether the backup power supply apparatus 300 is connected to the direct current bus DC bus or the alternating current bus AC bus. In both cases, when the two power supplies are switched, electric energy of the battery pack may be used to supply power to the load of the CRAC, so that the load of the CRAC is not powered off and does not stop operating. In the following embodiment, an example in which the backup power supply apparatus 300 is connected to the direct current bus DC bus is used for description.

FIG. 3 shows merely an example implementation of the switching circuit. For example, the switching circuit includes a first branch and a second branch. A first terminal of the first branch is configured to connect to a first power supply IN1 of the two power supplies, and a first terminal of the second branch is configured to connect to a second power supply IN2 of the two power supplies. A second terminal of the first branch and a second terminal of the second branch are connected together to connect to the alternating current bus AC bus. A corresponding switching device is connected in series on both the first branch and the second branch, and the switching devices are configured to switch the first power supply IN1 and the second power supply IN2. For example, the switching device may be an ATS. In addition, for safety corrective maintenance, the first branch is connected to the first power supply IN1 through a first input circuit breaker K1, and the second branch is connected to the second power supply IN2 through a second input circuit breaker K2. In addition, to implement lightning protection, the first branch and the second branch are further connected to surge protective devices SPD1 and SPD2, respectively. When an electric loop suddenly generates a peak current or voltage due to external interference, the surge protective device can be conducted for shunting in a very short time, thereby avoiding damage caused by the surge to another device in the electric loop. In addition, to implement lightning protection, the first branch and the second branch are further connected to lightning protection and voltage detection boards FV1 and FV2, respectively, which are used to perform lightning protection and voltage detection.

It can be learned by comparing FIG. 2 and FIG. 3 that, because the backup power supply apparatus in FIG. 3 is always connected to the load of the CRAC, regardless of how the two power supplies are switched or fail, supplying power to the load of the CRAC by the backup power supply apparatus is not affected.

The power supply system of the CRAC provided in this embodiment of this application includes the backup power supply apparatus. The backup power supply apparatus includes the battery pack. The backup power supply apparatus may be connected to an alternating current bus or a direct current bus formed after the two power supplies are combined. Because the backup power supply apparatus is connected to a combined circuit formed after the two power supplies are switched, regardless of how the two power supplies are switched, a connection relationship between the battery pack and the load of the CRAC is not affected. In other words, the battery pack always keeps the connection with the load of the CRAC, and the connection is never broken. Therefore, when the two power supplies are switched, the battery pack may supply power to the load of the CRAC, even if the alternating current bus encounters a short-time power failure during switching between the two power supplies. However, supplying power to the load of the CRAC by the battery pack is not affected. Therefore, the power supply system of the CRAC provided in this embodiment of this application may continuously supply power to the load of the CRAC, and a short-time power supply interruption caused by switching between the two power supplies does not occur. This ensures that the load of the CRAC operates normally, and further ensures that the temperature in the equipment room is normal.

For ease of description, the following uses one CRAC as an example for description. When there are a plurality of CRACs, principles for a basic power supply topology are similar.

The following describes an implementation in which the power supply system includes a plurality of DC/AC circuits with reference to the accompanying drawings. Each DC/AC circuit may supply power to one air conditioning load, for example, supply power to one fan or supply power to one compressor. A quantity of DC/AC circuits may be set based on a quantity of loads included in the CRAC. In addition, whether the air conditioning loads are specifically distributed in one or more air conditioning devices is not specifically limited. For simplicity of description, the following uses an example in which the power supply system includes two DC/AC circuits, one DC/AC circuit supplies power to the fan, and the other DC/AC circuit supplies power to the compressor for description.

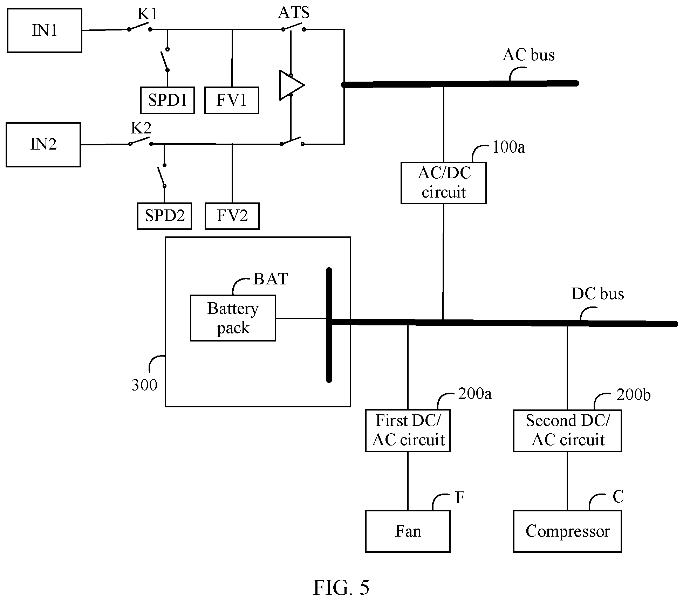

FIG. 5 is a schematic diagram of yet another power supply system of a CRAC according to an embodiment of this application.

In a possible implementation, a direct current bus DC bus in the power supply system provided in this embodiment of this application may be connected to at least two DC/AC circuits, input terminals of the at least two DC/AC circuits are all connected to the direct current bus DC bus, and each DC/AC circuit is configured to supply power to a load in the CRAC.

A quantity of fans and a quantity of compressors included in one CRAC are not limited in this embodiment of this application. FIG. 5 shows merely an example in which one fan and one compressor are included. A first DC/AC circuit 200a supplies power to a fan F, and a second DC/AC circuit 200b supplies power to a compressor C.

It should be understood that, for power supply independence, each fan may correspond to one DC/AC circuit, and each compressor may correspond to one DC/AC circuit. In other words, each load of the CRAC may have a one-to-one correspondence with a DC/AC circuit.

In addition, a quantity of battery packs in the backup power supply apparatus may be flexibly configured based on an actual requirement, so that short-term backup power may be supported, and long-term backup power supply may be implemented by increasing the quantity of battery packs.

The power supply system provided in this embodiment of this application may alternatively include a plurality of AC/DC circuits. A purpose of setting the plurality of AC/DC circuits is to increase a loading capability, to facilitate expansion of more air conditioning loads, or expansion of more air conditioners; in other words, to facilitate expansion of a quantity of loads.

In FIG. 5, an example in which the CRAC includes one fan and one compressor is used for description. The following describes a case in which the load of the CRAC includes at least two fans and at least two compressors.

To be specific, the fans and the compressors are a first fan F1 and a second fan F2, and a first compressor C1 and a second compressor C2, respectively. Each DC/AC circuit is configured to supply power to one of the at least two fans or one of the at least two compressors. As shown in FIG. 5, the first DC/AC circuit 200a is configured to supply power to the fan F, and the second DC/AC circuit 200b is configured to supply power to the compressor C. It should be understood that FIG. 5 shows merely an example, and one fan and one compressor are used for illustration purposes. In addition, a plurality of fans and a plurality of compressors may be included. Each fan corresponds to one DC/AC circuit, and each compressor corresponds to one DC/AC circuit. Certainly, one DC/AC circuit may simultaneously supply power to a plurality of fans, and one DC/AC circuit may simultaneously supply power to a plurality of compressors. In addition, one DC/AC circuit may alternatively supply power to both the fan and the compressor.

The power supply system provided in this embodiment of this application may include a plurality of AC/DC circuits. A purpose of setting the plurality of AC/DC circuits is to increase a loading capability, so as to facilitate expansion of more loads or expansion of more air conditioners. When the power supply system has a strong loading capability, it is not limited whether the plurality of loads connected to the power supply system are located in one physical air conditioner or in a plurality of different physical air conditioners.

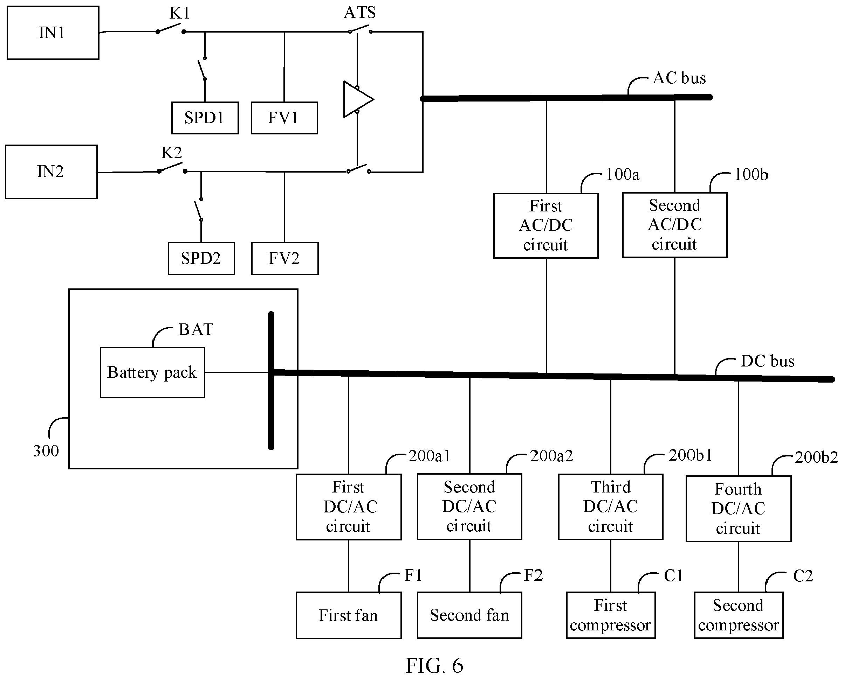

The following describes an implementation in which the power supply system includes a plurality of AC/DC circuits with reference to FIG. 6. When the power supply system includes a plurality of AC/DC circuits, a quantity of air conditioning loads is not limited, and may be set based on an actual requirement. For example, there may be one fan and one compressor shown in FIG. 5, or may be a plurality of fans and a plurality of compressors.

FIG. 6 is a schematic diagram of still another power supply system of a CRAC according to an embodiment of this application.

The power supply system provided in this embodiment of this application includes at least the following two AC/DC circuits: a first AC/DC circuit 100a and a second AC/DC circuit 100b.

Input terminals of the first AC/DC circuit 100a and the second AC/DC circuit 100b are all connected to an alternating current bus AC bus, and output terminals of the first AC/DC circuit 100a and the second AC/DC circuit 100b are all connected to a direct current bus DC bus.

In this embodiment, an example in which the CRAC includes a plurality of fans and a plurality of compressors is used for description. To be specific, as shown in FIG. 6, in this embodiment, the CRAC includes at least the following two fans: a first fan F1 and a second fan F2. The CRAC further includes at least the following two compressors: a first compressor C1 and a second compressor C2.

When each fan corresponds to one DC/AC circuit, and each compressor corresponds to one DC/AC circuit, as shown in FIG. 6, an input terminal of a first DC/AC circuit 200a1 is connected to the DC bus, and an output terminal of the first DC/AC circuit 200a1 is configured to supply power to the first fan F1. Similarly, an input terminal of a second DC/AC circuit 200a2 is connected to the DC bus, and an output terminal of the second DC/AC circuit 200a2 is configured to supply power to the second fan F2; an input terminal of a third DC/AC circuit 200b1 is connected to the DC bus, and an output terminal of the third DC/AC circuit 200b1 is configured to supply power to the first compressor C1; and an input terminal of a fourth DC/AC circuit 200b2 is connected to the DC bus, and an output terminal of the fourth DC/AC circuit 200b2 is configured to supply power to the second compressor C2.

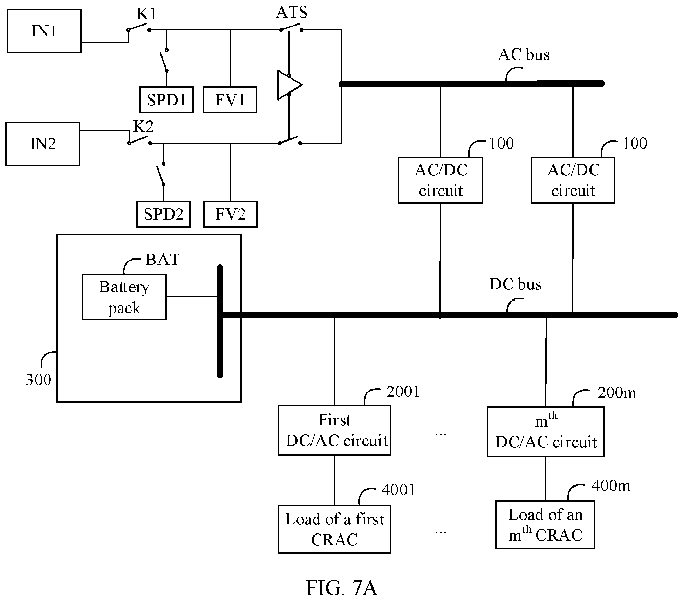

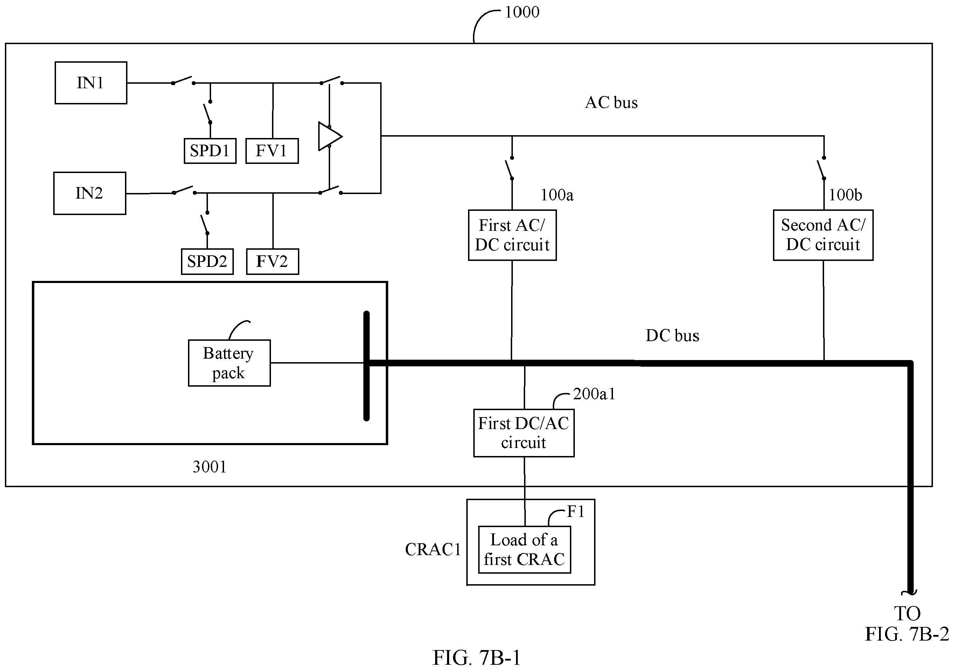

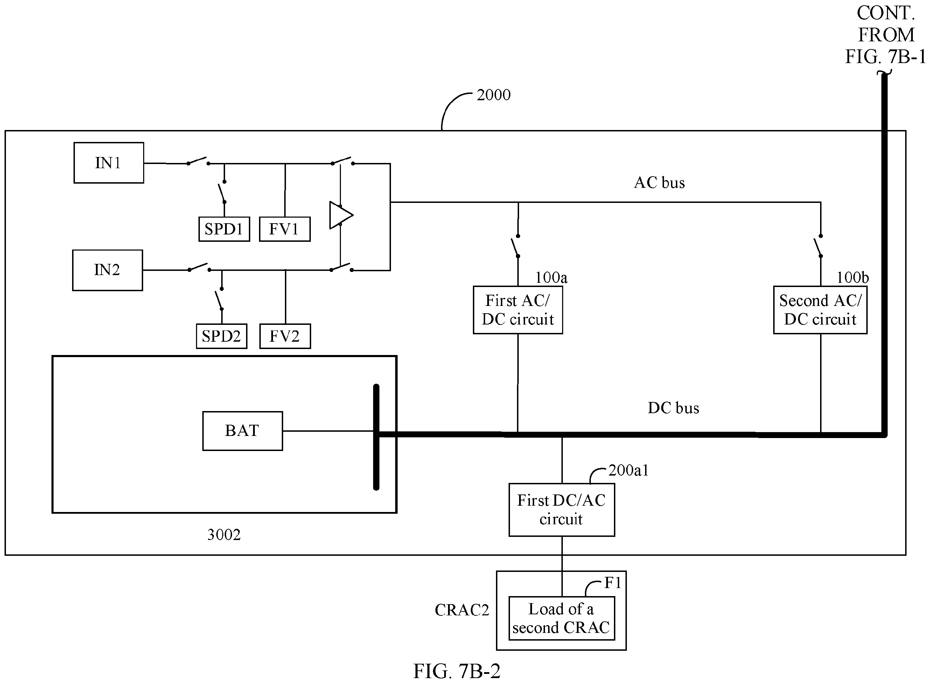

FIG. 6 shows merely an example in which the power supply system includes two AC/DC circuits. It should be understood that more AC/DC circuits may be set between the alternating current bus AC bus and the direct current bus DC bus based on an actual requirement. In addition, FIG. 7 shows an example in which the power supply system includes four DC/AC circuits. It should be understood that a quantity of DC/AC circuits is not limited in this embodiment of this application, and more DC/AC circuits may be set based on an actual requirement.

In the power supply system provided in this embodiment of this application, a quantity of DC/AC circuits may be flexibly configured based on a quantity of fans and a quantity of compressors included in the CRAC, to easily implement integrated power distribution of the CRAC. Both the quantity of DC/AC circuits and the quantity of AC/DC circuits may be flexibly configured. Therefore, the power supply system may be flexibly expanded based on an application scenario.

The embodiment corresponding to FIG. 6 is a case in which one CRAC includes a plurality of fans and a plurality of compressors. In addition, a quantity of CRACs that can be powered by the power supply system is not limited in this embodiment of this application. The power supply system may supply power to a load included in one CRAC, or may supply power to loads included in a plurality of CRACs. Specifically, the quantity of CRACs may be determined based on a power of the CRAC and a power that can be provided by the direct current bus or the alternating current bus for the load. The following describes a case in which the power supply system supplies power to loads of a plurality of CRACs.

FIG. 7A is a schematic diagram of a power supply system of a CRAC according to an embodiment of this application.

The power supply system of the CRAC provided in this embodiment may simultaneously supply power to loads included in a plurality of CRACs. A quantity of loads included in each CRAC is not specifically limited in this embodiment of this application, and there may be one load or a plurality of loads. In addition, a quantity of DC/AC circuits included in the power supply system is not limited in this embodiment of this application. The DC/AC circuits may have a one-to-one correspondence with the air conditioning loads, or a plurality of loads may correspond to a same DC/AC circuit. The following uses merely an example in which one CRAC includes one load and one load of the CRAC corresponds to one DC/AC circuit for description.

In the example shown in FIG. 7A, a backup power supply apparatus 300 is connected to a direct current bus DC bus and may simultaneously supply power to m air conditioners, where m is an integer greater than or equal to 2. The direct current bus DC bus supplies power to a load 4001 of a first CRAC through a first DC/AC circuit 2001, until the direct current bus DC bus supplies power to a load 400m of an m^{th} CRAC through an m^{th} DC/AC circuit 200m.

It should be understood that, when the power supply system supplies power to loads included in a plurality of CRACs, there may be one DC bus or a plurality of DC buses. When there is one DC bus, loads included in the plurality of CRACs may be all connected to a same direct current bus DC bus, as shown in FIG. 7A. When there are a plurality of DC buses, loads included in the plurality of CRACs are connected to different direct current buses DC buses, but different DC buses may be connected together, as shown in FIG. 7B-1 and FIG. 7B-2.

In the foregoing description, one backup power supply apparatus simultaneously supplies power to the loads included in the plurality of CRACs. In the following description, each CRAC corresponds to a respective backup power supply apparatus, two CRACs are used as an example, and direct current buses corresponding to the two CRACs are connected together. In other words, loads of the two CRACs share one direct current bus. When direct current buses of the plurality of CRACs are connected together, a quantity of DC/AC circuits included in the power supply system or a quantity of AC/DC circuits is not limited. To describe a case in which direct current buses of power supply systems corresponding to the two CRACs are connected together, the following briefly illustrates that each power supply system includes two AC/DC circuits, a first CRAC includes one load, a second CRAC includes one load, and each load corresponds to one DC/AC circuit. It should be understood that a quantity of loads included in each CRAC is not limited in this application, and each CRAC may include a plurality of loads.

FIG. 7B-1 and FIG. 7B-2 are a schematic diagram of still another power supply system of a CRAC according to an embodiment of this application.

Architectures of the power supply systems corresponding to the two CRACs in FIG. 7B-1 and FIG. 7B-2 are completely the same. It can be seen from FIG. 7B-1 and FIG. 7B-2 that architectures and internal connection relationships of a first power supply system 1000 and a second power supply system 2000 are the same, the two power supply systems are independent, and only DC buses in the power supply systems corresponding to the two CRACs are connected together.

Loads of the two CRACs are represented by CRAC1 and CRAC2, respectively.

Internal architectures of the CRAC1 and the CRAC2 are the same, and drive circuits corresponding to the CRAC1 and the CRAC2 are also the same. One of the CRAC1 and the CRAC2 is used as an example for description. The power supply system of each CRAC includes at least the following two AC/DC circuits: a first AC/DC circuit 100a and a second AC/DC circuit 100b.

Input terminals of the first AC/DC circuit 100a and the second AC/DC circuit 100b are all connected to an alternating current bus AC bus, and output terminals of the first AC/DC circuit 100a and the second AC/DC circuit 100b are all connected to the direct current bus DC bus.

A load F1 of a first CRAC included in the CRAC1 is connected to the direct current bus DC bus through a first DC/AC circuit 200a1, and a load F1 of a second CRAC included in the CRAC2 is connected to the direct current bus DC bus through a first DC/AC circuit 200a1.

A difference between the power supply systems corresponding to the CRAC1 and the CRAC2 lies in that backup power supply apparatuses corresponding to the CRAC1 and the CRAC2 are different. To be specific, the CRAC1 and the CRAC2 correspond to a backup power supply apparatus 3001 and a backup power supply apparatus 3002, respectively.

With reference to the accompanying drawings, the following describes an implementation scenario in which the backup power supply apparatus in the power supply system provided in this embodiment of this application may further include a bidirectional direct current/direct current circuit.

FIG. 8 is a schematic diagram of still another power supply system of a CRAC according to an embodiment of this application.

In the power supply system provided in this embodiment of this application, an example in which a backup power supply apparatus is connected to a direct current bus DC bus is used for description.

To flexibly use a battery pack BAT in a backup power supply apparatus 300, when a voltage of the battery pack BAT is inconsistent with a voltage of a direct current bus DC bus, the backup power supply apparatus 300 further includes a bidirectional direct current/direct current circuit 300b. A first terminal of the bidirectional direct current/direct current circuit 300b is connected to the direct current bus DC bus, and a second terminal of the bidirectional direct current/direct current circuit 300b is connected to the battery pack BAT.

The bidirectional direct current/direct current circuit 300b is configured to convert the voltage of the battery pack BAT into a voltage matching the CRAC, and is further configured to convert a voltage of the direct current bus DC bus into a voltage matching the battery pack BAT to charge the battery pack BAT. The bidirectional direct current/direct current circuit 300b may operate bidirectionally. To be specific, the bidirectional direct current/direct current circuit 300b may convert and provide electric energy of the battery pack BAT to the direct current bus DC bus, and may also convert electric energy of the direct current bus DC bus and charge the battery pack BAT.

A specific topology of the bidirectional direct current/direct current circuit 300b is not limited in this embodiment of this application, and any power conversion circuit that can implement a bidirectional DC/DC conversion function may be used.

In the power supply system of the CRAC provided in this embodiment of this application, because the backup power supply apparatus includes the bidirectional direct current/direct current circuit, there is no limitation on specifications of the battery pack, and the specifications of the battery pack may be flexibly selected. Even if the voltage of the battery pack does not match the voltage of the direct current bus, the bidirectional direct current/direct current circuit may be used to convert the voltage of the battery pack into the voltage matching the direct current bus for discharging, or convert the voltage of the direct current bus into the voltage matching the battery pack for charging.

It should be understood that, the power supply system described in each of the foregoing embodiments may be integrated inside the CRAC. To be specific, both the power supply system described above and the air conditioning load may be integrated inside a cabinet of the CRAC, to form a CRAC cabinet having a self-contained power supply function. In another possible implementation, the power supply system described above may alternatively be disposed outside the cabinet of the CRAC as an external drive circuit for supplying power to a load of the CRAC. In other words, the load of the CRAC is disposed in one CRAC cabinet, the power supply system of the CRAC is disposed in another power supply apparatus, and the power supply apparatus may be connected to the cabinet in which the load of the CRAC is located. When the CRAC requires power supply, a power supply cabinet is connected to the load of the CRAC. Specific product forms of the power supply system and the load of the CRAC are not specifically limited in this embodiment of this application, and may be set based on an actual requirement. In still another possible implementation, the backup power supply apparatus may be a separate cabinet, which is connected to a CRAC cabinet including one or more loads through the direct current bus DC bus, the alternating current bus AC bus, the DC/AC circuit, and the AC/DC circuit according to the manners of the various embodiments described above to implement power supply to the CRAC.

The following describes a redundancy mode in which external power is supplied to the CRAC.

FIG. 9 is a schematic diagram of another power supply system of a CRAC according to an embodiment of this application.

Generally, for one CRAC, to ensure reliable power supply of a first power supply IN1 and a second power supply IN2, the first power supply IN1 generally corresponds to one mains supply A and one diesel generator 1 (generally, a diesel engine generates power), and the second power supply IN2 corresponds to one mains supply B and one diesel generator 2. Both the mains supply and the diesel generator provide alternating current power. A battery pack BAT in a backup power supply apparatus 300 provides direct current power. When the alternating current power is available, the alternating current power is preferentially used to supply power to a load of the CRAC. Direct current power of the battery pack BAT is used to supply power to the load of the CRAC, only when the alternating current power runs out of power.

In addition, to switch the mains supply and the diesel generator, the power supply system of the CRAC provided in this embodiment of this application further includes first automatic transfer switching equipment ATS1 and second automatic transfer switching equipment ATS2.

An output terminal of the first ATS1 is connected to a first terminal of a first branch, and an output terminal of the second ATS2 is connected to a first terminal of a second branch.

A first input terminal of the first ATS 1 is configured to connect to the first mains supply A, and a second input terminal of the first ATS1 is configured to connect to the first diesel generator 1.

A first input terminal of the second ATS2 is configured to connect to the second mains supply B, and a second input terminal of the second ATS2 is configured to connect to the second diesel generator 2.

The first automatic transfer switching equipment ATS1 is configured to switch the mains supply A and the diesel generator 1, and the second automatic transfer switching equipment ATS2 is configured to switch the mains supply B and the diesel generator 2.

During actual operation, for example, when both the mains supply A and the diesel generator 1 connected to the first power supply IN1 run out of power, switching to the mains supply B or the diesel generator 1 connected to the second power supply IN2 is required. To be specific, the ATS1 is disconnected from the IN1 and the ATS2 is connected to the IN2. During operation of the ATS1 and the ATS2, the AC bus is disconnected from an external alternating current power supply for a short time. In other words, the external alternating current circuit cannot be used to supply power to a fan and a compressor of the CRAC during switching between the first power supply IN1 and the second power supply IN2. However, the backup power supply apparatus 300 provided in this embodiment of this application may supply power to the load of the CRAC during the switching between the two power supplies, to ensure that the load of the CRAC is not powered off.

When the backup power supply apparatus, the DC/AC circuit, and the AC/DC circuit in the power supply system provided in the foregoing embodiment are all integrated with the load of the CRAC, the CRAC provided in this embodiment of this application may be shown in FIG. 10. In other words, all components included in the power supply system are integrated inside the CRAC. For the CRAC, there are only two external alternating currents for redundant power supply. In other words, the first power supply IN1 of the CRAC is connected to the mains supply A or the diesel generator 1 through the ATS1, and the second power supply IN2 of the CRAC is connected to the mains supply B or the diesel generator 2 through the ATS2.

It can be seen from FIG. 10 that, for the CRAC, only the mains supply and the diesel generator are left in the external power supply architecture, a low-voltage power distribution cabinet and an output power distribution cabinet are not required, and a UPS and a corresponding battery are not required, either. The power supply system inside the CRAC includes the backup power supply apparatus 300, which may implement self-contained power supply. When the external alternating current power supply fails, the backup power supply apparatus 300 may be used to supply power to keep the fan and the compressor running uninterruptedly, and ensure that the temperature in the equipment room does not rise suddenly. Compared with a conventional power supply system, the power supply system provided in this embodiment of this application has a simpler structure, so that many components are not required. Therefore, much more space and costs are saved.

In FIG. 10, an example in which all components including the backup power supply apparatus 300 of the power supply system are integrated inside the CRAC is used for description. The following describes a case in which the backup power supply apparatus in the power supply system is disposed outside the CRAC, and all components of the power supply system except the backup power supply apparatus are integrated inside the CRAC, for example, the AC/DC circuit, the DC/AC circuit, the alternating current bus, and the direct current bus are all integrated inside the CRAC.

FIG. 11 is a schematic diagram in which a backup power supply apparatus is disposed outside a CRAC according to an embodiment of this application.

The power supply system provided in this embodiment is described by using an example in which a backup power supply apparatus 300 is disposed outside the CRAC, and another component in the power supply system is disposed inside the CRAC.

The backup power supply apparatus 300 may be connected to a direct current bus DC bus or an alternating current bus AC bus in the CRAC. When the backup power supply apparatus 300 is connected to the direct current bus DC bus in the CRAC, no AC/DC circuit may be disposed inside the backup power supply apparatus 300. When the backup power supply apparatus 300 is connected to the alternating current bus AC bus in the CRAC, an AC/DC circuit needs to be disposed inside the backup power supply apparatus 300. The backup power supply apparatus 300 may be connected to the alternating current bus or the direct current bus integrated inside the CRAC.

The DC/AC circuit and the AC/DC circuit in the power supply system corresponding to the CRAC provided in FIG. 11 may be integrated inside a cabinet of the CRAC together with a load of the CRAC, and only the backup power supply apparatus 300 in the power supply system is disposed outside the cabinet of the CRAC.

It can be seen from FIG. 10 and FIG. 11 that regardless of whether the backup power supply apparatus 300 is disposed inside or outside the CRAC, an external power supply architecture of the CRAC is simplified.

The following describes an implementation in which the power supply system of the CRAC provided in this embodiment of this application is compatible with a conventional external power supply system of the CRAC.

In the foregoing embodiments, for example, all components except the CRAC 400 in FIG. 3 are components inside the power supply system provided in this embodiment of this application. It should be understood that the power supply system provided in this embodiment of this application may be integrated inside the CRAC, or may be disposed outside the CRAC. The following uses an example in which the power supply system provided in each of the foregoing embodiments is disposed inside the CRAC for description.

In addition to the architectures shown in FIG. 10 and FIG. 11, the power supply system provided in this embodiment of this application may be further compatible with any power supply system shown in FIG. 3 to FIG. 9 and a conventional power supply system. The following describes the power supply system with reference to the accompanying drawings.

FIG. 12 is a schematic diagram of yet another power supply system of a CRAC according to an embodiment of this application.

The following uses an example in which a first power supply corresponds to a mains supply A and a first diesel generator and a second power supply corresponds to a mains supply B and a second diesel generator for description.

The first power supply is directly connected to the mains supply A or the first diesel generator through a first ATS1, but the second power supply needs to be connected to the mains supply B or the second diesel generator through an output power distribution cabinet, a UPS, a low-voltage power distribution cabinet, and a second ATS2 in sequence.

For ease of understanding, in this embodiment of this application, an example in which the two power supplies simultaneously supply power to the CRAC 400 is used for description.

As shown in FIG. 12, this embodiment of this application provides first automatic transfer switching equipment ATS1, second automatic transfer switching equipment ATS2, a low-voltage power distribution cabinet 1101, an output power distribution cabinet 1102, a battery 1103, and an uninterruptible power supply circuit 1104.

An output terminal of the first ATS 1 is connected to a first terminal of a first branch, a first input terminal of the first ATS1 is configured to connect to a first mains supply, and a second input terminal of the first ATS1 is configured to connect to the first diesel generator. A first input terminal of the second ATS2 is configured to connect to a second mains supply, and a second input terminal of the second ATS2 is configured to connect to the second diesel generator.

For a circuit that provides the second power supply:

An input terminal of the low-voltage power distribution cabinet 1101 is connected to an output terminal of the second ATS2, an output terminal of the low-voltage power distribution cabinet 1101 is connected to a first terminal of the uninterruptible power supply circuit UPS 1104, a second terminal of the uninterruptible power supply circuit UPS 1104 is connected to an input terminal of the output power distribution cabinet 1102, an output terminal of the output power distribution cabinet 1102 is connected to a first terminal of a second branch, and a third terminal of the uninterruptible power supply circuit UPS 1104 is connected to the battery 1103.

Generally, the UPS 1104 includes a rectifier circuit and an inverter circuit. An input terminal of the rectifier circuit is connected to the output terminal of the low-voltage power distribution cabinet 1101, an output terminal of the rectifier circuit is connected to an input terminal of the inverter circuit, and an output terminal of the inverter circuit is connected to the input terminal of the output power distribution cabinet 1102. When an alternating current side (the mains supply B or the second diesel generator) has power, the output terminal of the rectifier circuit charges the battery 1103, and at the same time, the rectifier circuit transfers electric energy to the inverter circuit, to supply power to a load of a CRAC at a back end. A working mode of the two power supplies is as follows: As long as the alternating current side (the mains supply B or the second diesel generator) has power, the UPS 1104 does not obtain power from the battery 1103 to supply power to the load of the CRAC, but preferentially uses electric energy provided by the mains supply and the diesel generator to supply power to the load of the CRAC.

The CRAC in the architecture in FIG. 12 is expanded into the CRAC in FIG. 8. For details, refer to FIG. 13. FIG. 13 is a schematic diagram of another power supply system of a CRAC according to an embodiment of this application.

The CRAC corresponding to the power supply system provided in this embodiment integrates the power supply system provided in the foregoing embodiments of this application, and the CRAC is externally compatible with a conventional power supply architecture. Such an architecture can better ensure normal power supply of the CRAC. A battery is disposed both inside and outside the CRAC. Specifically, a battery pack is disposed inside the CRAC, and a battery and a UPS are disposed outside the CRAC. When the two mains supplies and the two diesel generators are all powered off, the UPS may be used to supply power to the load of the CRAC.

In FIG. 12, a source path of only the second power supply includes a low-voltage power distribution cabinet, a UPS, a battery, and an output power distribution cabinet. Advantages are simple structure, small footprint, and low costs. However, when the mains supply A and the first diesel generator run out of power, the mains supply B and the second diesel generator also run out of power, and the UPS is faulty, the external alternating current power supply of the CRAC is interrupted. In this case, only a backup power supply apparatus in the power supply system of the CRAC can supply power.

The following describes another backup power supply mode. Source paths of the first power supply and the second power supply each include a UPS and a battery.

FIG. 14 is a schematic diagram of still another power supply system of a CRAC according to an embodiment of this application.

It can be seen by comparing FIG. 12 and FIG. 14 that the power supply system of the CRAC provided in this embodiment of this application is more complex, and source paths of two power supplies have a same architecture.

The power supply system provided in this embodiment of this application includes first automatic transfer switching equipment ATS1, second automatic transfer switching equipment ATS2, a first low-voltage power distribution cabinet 1101a, a first output power distribution cabinet 1102a, a first battery 1103a, a first uninterruptible power supply circuit 1104a, a second low-voltage power distribution cabinet 1101b, a second output power distribution cabinet 1102b, a second battery 1103b, and a second uninterruptible power supply circuit 1104b.

A first input terminal of the first ATS1 is configured to connect to a first mains supply, namely, a mains supply A, and a second input terminal of the first ATS1 is configured to connect to a first diesel generator, namely, a diesel generator 1. A first input terminal of the second ATS2 is configured to connect to a second mains supply, namely, a mains supply B, and a second input terminal of the second ATS2 is configured to connect to a second diesel generator, namely, a diesel generator 2.

An output terminal of the first ATS1 is connected to an input terminal of the first low-voltage power distribution cabinet 1101a, an output terminal of the first low-voltage power distribution cabinet 1101a is connected to a first terminal of the first uninterruptible power supply circuit 1104a, a second terminal of the first uninterruptible power supply circuit 1104a is connected to an input terminal of the first output power distribution cabinet 1102a, an output terminal of the first output power distribution cabinet 1102a is connected to a first terminal of a first branch, and a third terminal of the first uninterruptible power supply circuit 1104a is connected to the first battery 1103a.

An output terminal of the second ATS2 is connected to an input terminal of the second low-voltage power distribution cabinet 1101b, an output terminal of the second low-voltage power distribution cabinet 1101b is connected to a first terminal of the second uninterruptible power supply circuit UPS 1104b, a second terminal of the second uninterruptible power supply circuit UPS 1104b is connected to an input terminal of the second output power distribution cabinet 1102b, an output terminal of the second output power distribution cabinet 1102b is connected to a first terminal of a second branch, and a third terminal of the second uninterruptible power supply circuit UPS 1104b is connected to the second battery 1103b.

It can be learned by comparing FIG. 14 and FIG. 12 that FIG. 14 includes two sets of UPSs. When one UPS is faulty, the other UPS may continue to supply power to a load of the CRAC, to ensure normal operating of the CRAC.

It should be understood that a conventional power supply architecture of a CRAC is a part other than the CRAC in FIG. 12 or FIG. 14. To be specific, internal power supply of the conventional CRAC in FIG. 12 and FIG. 14 is shown in FIG. 2. Regardless of how many UPSs are included outside the CRAC, when the two power supplies in the conventional power supply architecture are switched, a short-time power failure may still occur. However, the power supply system provided in this embodiment of this application does not encounter a short-time power failure because the load of the CRAC is always connected to a battery pack.

In addition, by comparing FIG. 10 and FIG. 11 with FIG. 12 and FIG. 14, it can be seen that the power supply architectures outside the CRACs corresponding to FIG. 10 and FIG. 11 are simpler and require lower costs than those shown in FIG. 12 and FIG. 14.

FIG. 15 is a schematic diagram of yet another power supply system of a CRAC according to an embodiment of this application.

FIG. 15 is an expansion of the CRAC in FIG. 14 into the CRAC in FIG. 8.

The CRAC corresponding to the power supply system provided in this embodiment integrates the power supply system provided in the foregoing embodiments of this application, and the CRAC is externally compatible with a conventional power supply architecture. Such an architecture can better ensure normal power supply to a load of the CRAC. A battery is disposed both inside and outside the CRAC. Specifically, a battery pack is disposed inside the CRAC, and a battery and a UPS are disposed in each of two external power supplies. When two mains supplies and two diesel generators are all powered off, the UPS may be used to supply power to the load of the CRAC.

The power supply system provided in each of the foregoing embodiments is described by using an example in which two power supplies supply power to a same CRAC. It should be understood that a plurality of CRACs may share two power supplies. The following uses an example in which the two power supplies may simultaneously supply power to two CRACs for description.

FIG. 16 is an architectural diagram of power supply corresponding to two CRACs according to an embodiment of this application.

The two CRACs shown in FIG. 16 include a first CRAC 400a and a second CRAC 400b. An example in which the CRAC integrates a power supply system and a load is used for description. It can be seen that the first CRAC 400a corresponds to two power supplies IN1 and IN2, and the second CRAC 400b corresponds to two power supplies IN1 and IN2. The IN1 may be connected to a mains supply A or a diesel generator 1 through an ATS1. The IN2 may be connected to a mains supply B or a diesel generator 2 through an ATS2. It can be seen that when the mains supply A has power, the mains supply A may simultaneously supply power to INls of the two CRACs. Similarly, when the mains supply B has power, the mains supply B may simultaneously supply power to IN2s of the two CRACs.

In addition, in FIG. 16, only two CRACs share external alternating current power. Alternatively, more CRACs may share the external alternating current power. Details are not described herein again. In addition, the external power supply of the two CRACs shown in FIG. 16 includes only a mains supply and a diesel generator. In addition, to be compatible with a conventional power supply system, the external power supply architecture shown in FIG. 12 or FIG. 14 may alternatively be included. Details are not described herein again.

### Air Conditioning Device Embodiment

Based on the power supply system of the air conditioning device provided in the foregoing embodiment, this embodiment of this application further provides an air conditioning device. This embodiment of this application imposes no limitation on an application scenario of the air conditioning device, and may be applied to any scenario in which temperature control is required. For example, the application scenario may be rail transit, a factory building, a commercial building, or a data center.

An air conditioning load provided in this embodiment of this application is a general concept. When there are a plurality of air conditioning loads in this embodiment of this application, the air conditioning loads may be located inside one air conditioner, or may be respectively located inside different air conditioners. This is not specifically limited. This embodiment of this application focuses on uninterruptible power supply to the air conditioning load. A bearing form of a physical device of the air conditioning load is not limited, and a person skilled in the art may set the bearing form based on an actual requirement. For example, the power supply system may supply power to air conditioning loads in a plurality of air conditioning devices, or may supply power to air conditioning loads in one air conditioning device. Alternatively, the power supply system may supply power to some air conditioning loads in one air conditioning device, and the remaining air conditioning loads are powered by another power supply system, provided that the air conditioning loads are powered uninterruptedly.

To enable a person skilled in the art to better understand the air conditioning device provided in this embodiment of this application, the following describes the air conditioning device in detail. The air conditioning device provided in this embodiment of this application not only includes an air conditioning load such as a fan or a compressor, but may further include a power supply system at a front end of the air conditioning device. In other words, the power supply system is integrated inside the air conditioning device. A backup power supply apparatus in the power supply system may be integrated inside the air conditioning device, or may be integrated outside the air conditioning device. When the backup power supply apparatus is disposed outside the air conditioning device, the backup power supply apparatus may be connected to an alternating current bus or a direct current bus.

The air conditioning device provided in this embodiment includes an alternating current bus, a direct current bus, a first alternating current/direct current AC/DC circuit, a first direct current/alternating current DC/AC circuit, a backup power supply apparatus, and an air conditioning load. The backup power supply apparatus includes at least a battery pack.

The alternating current bus is configured to connect to two power supplies through a switching circuit. An input terminal of the first AC/DC circuit is connected to the alternating current bus, and an output terminal of the first AC/DC circuit is connected to the direct current bus. An input terminal of the first DC/AC circuit is connected to the direct current bus, and an output terminal of the first DC/AC circuit is configured to supply power to a first air conditioning load. The backup power supply apparatus is connected to the direct current bus or the alternating current bus. The backup power supply apparatus is configured to provide electric energy for the direct current bus or the alternating current bus when the two power supplies are switched or fail, so that the first air conditioning load is not powered off.

The air conditioning device provided in this embodiment of this application includes the backup power supply apparatus. The backup power supply apparatus includes the battery pack. The backup power supply apparatus may be connected to an alternating current bus or a direct current bus formed after the two power supplies are combined. Because the backup power supply apparatus is connected to a combined circuit formed after the two power supplies are switched, regardless of how the two power supplies are switched, a connection relationship between the battery pack and the air conditioning load is not affected. In other words, the battery pack always keeps the connection with the air conditioning load, and the connection is never broken. Therefore, when the two power supplies are switched or fail, the battery pack may supply power to the air conditioning load, even if the alternating current bus encounters a short-time power failure during switching between the two power supplies. However, supplying power to the air conditioning load by the battery pack is not affected. Therefore, the air conditioning device provided in this embodiment of this application can ensure normal operating of the air conditioning load when the two power supplies are switched or fail, and further provide a normal temperature environment for a device that requires temperature control.

In the foregoing example, the alternating current bus, the direct current bus, the alternating current/direct current AC/DC circuit, the direct current/alternating current DC/AC circuit, and the backup power supply apparatus included in the power supply system are all integrated inside the air conditioning device. For details, refer to the foregoing description of FIG. 10. For details about the alternating current bus, the direct current bus, the alternating current/direct current AC/DC circuit, the direct current/alternating current DC/AC circuit, and the backup power supply apparatus included in the power supply system, refer to the foregoing descriptions of FIG. 3 to FIG. 9.

In addition, this embodiment of this application further provides an air conditioning device, where the interior of the air conditioning device includes an alternating current bus, a direct current bus, an alternating current/direct current AC/DC circuit, and a direct current/alternating current DC/AC circuit. The interior of the air conditioning device does not include a backup power supply apparatus. In other words, the backup power supply apparatus is disposed outside the air conditioning device. For details, refer to the description corresponding to FIG. 11. The backup power supply apparatus may be connected to the direct current bus or the alternating current bus disposed inside the air conditioning device. For details about the alternating current bus, the direct current bus, the alternating current/direct current AC/DC circuit, and the direct current/alternating current DC/AC circuit included in the air conditioning device, refer to the foregoing descriptions of FIG. 3 to FIG. 9.

The air conditioning load in the air conditioning device may be directly connected or connected to the DC/AC circuit. This embodiment of this application imposes no limitation on whether the backup power supply apparatus is connected to the direct current bus or the alternating current bus. The following separately describes two cases.

First case: The backup power supply apparatus is specifically connected to the direct current bus.

The backup power supply apparatus further includes a bidirectional direct current/direct current circuit. A first terminal of the bidirectional direct current/direct current circuit is connected to the direct current bus, and a second terminal of the bidirectional direct current/direct current circuit is connected to a battery pack. The bidirectional direct current/direct current circuit is configured to convert a voltage of the battery pack into a voltage matching a load of an air conditioner, and is further configured to convert a voltage of the direct current bus into a voltage matching the battery pack to charge the battery pack.

Second case: The backup power supply apparatus is specifically connected to the alternating current bus.

The backup power supply apparatus further includes a bidirectional alternating current/direct current circuit. An input terminal of the bidirectional alternating current/direct current circuit is connected to the alternating current bus, and an output terminal of the bidirectional alternating current/direct current circuit is connected to a battery pack. The bidirectional alternating current/direct current circuit is configured to convert alternating current power of the alternating current bus into direct current power to charge the battery pack, and is further configured to convert a voltage of the battery pack into a voltage matching the alternating current bus to supply power to the load of the air conditioner. In other words, the bidirectional alternating current/direct current circuit has two working modes: rectifier and inverter. When working in the rectifier mode, the bidirectional alternating current/direct current circuit is configured to convert the alternating current power of the alternating current bus into the direct current power to charge the battery. When working in the inverter mode, the bidirectional alternating current/direct current circuit is configured to convert the direct current power into the alternating current power, connect to the alternating current bus, and cooperate with the AC/DC circuit connected between the alternating current bus and the direct current bus to supply power to the load of the air conditioner. In this embodiment of this application, a quantity of AC/DC circuits is not specifically limited, and a quantity of DC/AC circuits is not specifically limited, either. There may be one or more AC/DC circuits, or may be one or more DC/AC circuits.

For example, there are at least two AC/DC circuits. Input terminals of the at least two AC/DC circuits are all connected to the alternating current bus, and output terminals of the at least two AC/DC circuits are all connected to the direct current bus. In other words, the air conditioning device further includes a second AC/DC circuit. An input terminal of the second AC/DC circuit is connected to the alternating current bus, and an output terminal of the second AC/DC circuit is connected to the direct current bus.

For example, there are at least two DC/AC circuits. Input terminals of the at least two DC/AC circuits are all connected to the direct current bus, and each DC/AC circuit is configured to supply power to the load of the air conditioner. In other words, the air conditioning device further includes a second DC/AC circuit. An input terminal of the second DC/AC circuit is connected to the direct current bus, and an output terminal of the second DC/AC circuit is configured to supply power to a second air conditioning load.

A quantity of loads of the air conditioner is not specifically limited in this embodiment of this application. For example, the load of the air conditioner includes at least two fans and at least two compressors. Each DC/AC circuit is configured to supply power to one of the at least two fans or one of the at least two compressors.

A quantity of air conditioners to which the DC/AC circuit supplies power is not specifically limited in this embodiment of this application. For example, an output terminal of the DC/AC circuit is configured to supply power to at least two air conditioners.

In a possible implementation, the switching circuit includes a first branch and a second branch. A first terminal of the first branch is configured to connect to a first power supply of two power supplies, and a first terminal of the second branch is configured to connect to a second power supply of the two power supplies. A second terminal of the first branch and a second terminal of the second branch are connected together to connect to the alternating current bus. A corresponding switching device is connected in series on both the first branch and the second branch, and the switching devices are configured to switch the first power supply and the second power supply.

The air conditioning device provided in this embodiment of this application includes a backup power supply apparatus, and the backup power supply apparatus is connected to a combined circuit of the two power supplies. Therefore, regardless of how the two power supplies are switched, a connection relationship between the battery pack and the load of the air conditioner is not affected. The battery pack may supply power to the load of the air conditioner during switching between the two power supplies, so that the power supply of the load of the air conditioner is not interrupted, thereby ensuring a normal temperature.

Based on the power supply systems and the air conditioning devices provided in the foregoing embodiments, this embodiment of this application further provides a data center. A specific product form of the data center is not limited in this application, and may be a micro-modular type shown in FIG. 1A, or may be a data center of another type. The power supply systems provided in the foregoing embodiments may be integrated into an air conditioning device in the data center provided in this embodiment of this application. Because the power supply system may include a backup power supply apparatus, an air conditioning load may be continuously powered when two power supplies are switched or fail, thereby ensuring normal operating of the air conditioner.

In addition, this embodiment of this application provides a data center, where an air conditioning device is disposed separately from a power supply system; in other words, an air conditioning load is connected to the power supply system.

In addition, this embodiment of this application further provides a data center, where a backup power supply apparatus in a power supply system may be separately disposed, and the backup power supply apparatus may be connected to a direct current bus or an alternating current bus in the power supply system.

In conclusion, the foregoing plurality of implementations may be used for an internal physical architecture of the data center, provided that a load of an air conditioning device in the data center can be continuously powered and continue to operate normally when two power supplies are switched or fail, thereby ensuring a controllable temperature in the data center and normal operating of a server.

It should be understood that, in this application, "at least one " means one or more, and "a plurality of' means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

The foregoing descriptions are merely embodiments of this application, and are not intended to limit this application in any form. Although the preferred embodiments of this application are disclosed above, embodiments are not intended to limit this application. By using the method and the technical content disclosed above, any person of ordinary skill in the art can make a plurality of possible changes and modifications on the technical solutions of this application, or amend the technical solutions thereof to be embodiments with equal effects through equivalent variations without departing from the protection scope of the technical solutions of this application. Therefore, any simple amendments, equivalent variations, and modifications made on the above embodiments according to the technical essence of this application without departing from the content of the technical solutions of this application shall fall within the protection scope of the technical solutions of this application.

## Claims

1. A power supply system of an air conditioning device, comprising an alternating current bus, a direct current bus, a first alternating current/direct current AC/DC circuit, a first direct current/alternating current DC/AC circuit, and a backup power supply apparatus, wherein
the alternating current bus is configured to connect to two power supplies through a switching circuit;
an input terminal of the first AC/DC circuit is connected to the alternating current bus, and an output terminal of the first AC/DC circuit is connected to the direct current bus;
an input terminal of the first DC/AC circuit is connected to the direct current bus, and an output terminal of the first DC/AC circuit is configured to supply power to a first air conditioning load;
the backup power supply apparatus is connected to the direct current bus or the alternating current bus; and
the backup power supply apparatus is configured to: when the two power supplies are switched or fail, provide electric energy for the direct current bus or the alternating current bus, so that the first air conditioning load is not powered off.

2. The power supply system according to claim 1, wherein the backup power supply apparatus is connected to the direct current bus; and the backup power supply apparatus comprises a battery pack and a bidirectional direct current/direct current circuit, wherein
a first terminal of the bidirectional direct current/direct current circuit is connected to the direct current bus, and a second terminal of the bidirectional direct current/direct current circuit is connected to the battery pack; and
the bidirectional direct current/direct current circuit is configured to convert a voltage of the battery pack into a voltage matching the first air conditioning load, and is further configured to convert a voltage of the direct current bus into a voltage matching the battery pack to charge the battery pack.

3. The power supply system according to claim 1, wherein the backup power supply apparatus is connected to the alternating current bus; and the backup power supply apparatus comprises a battery pack and a bidirectional alternating current/direct current circuit, wherein
an input terminal of the bidirectional alternating current/direct current circuit is connected to the alternating current bus, and an output terminal of the bidirectional alternating current/direct current circuit is connected to the battery pack; and
the bidirectional alternating current/direct current circuit is configured to convert alternating current power of the alternating current bus into direct current power to charge the battery pack, and is further configured to convert a voltage of the battery pack into a voltage matching the alternating current bus to supply power to the first air conditioning load.

4. The power supply system according to any one of claims 1 to 3, further comprising a second AC/DC circuit, wherein
an input terminal of the second AC/DC circuit is connected to the alternating current bus, and an output terminal of the second AC/DC circuit is connected to the direct current bus.

5. The power supply system according to any one of claims 1 to 4, further comprising a second DC/AC circuit, wherein
an input terminal of the second DC/AC circuit is connected to the direct current bus, and an output terminal of the second DC/AC circuit is configured to supply power to a second air conditioning load.

6. The power supply system according to any one of claims 1 to 5, wherein the first air conditioning load comprises a fan, a compressor, or a pump.

7. The power supply system according to any one of claims 1 to 6, wherein the output terminal of the first DC/AC circuit is configured to supply power to at least two of the first air conditioning loads.

8. The power supply system according to any one of claims 1 to 7, wherein the switching circuit comprises a first branch and a second branch;
a first terminal of the first branch is configured to connect to a first power supply of the two power supplies, and a first terminal of the second branch is configured to connect to a second power supply of the two power supplies;
a second terminal of the first branch and a second terminal of the second branch are connected together to connect to the alternating current bus; and
a switching device is connected in series on both the first branch and the second branch, and the switching devices are configured to switch the first power supply and the second power supply.

9. The power supply system according to claim 8, wherein the first power supply comprises a first mains supply and a first diesel generator, and the second power supply comprises a second mains supply and a second diesel generator; and the power supply system further comprises first automatic transfer switching equipment ATS and second automatic transfer switching equipment ATS, wherein
the first terminal of the first branch is connected to the first power supply through the first ATS, wherein a first input terminal of the first ATS is configured to connect to the first mains supply, a second input terminal of the first ATS is configured to connect to the first diesel generator, and an output terminal of the first ATS is connected to the first terminal of the first branch; and
the first terminal of the second branch is connected to the second power supply through the second ATS, wherein a first input terminal of the second ATS is configured to connect to the second mains supply, a second input terminal of the second ATS is configured to connect to the second diesel generator, and an output terminal of the second ATS is connected to the first terminal of the second branch.

10. The power supply system according to claim 8, wherein the first power supply comprises a first mains supply and a first diesel generator, and the second power supply comprises a second mains supply and a second diesel generator; and the power supply system further comprises first automatic transfer switching equipment ATS, second automatic transfer switching equipment ATS, a low-voltage power distribution cabinet, an output power distribution cabinet, a battery, and an uninterruptible power supply circuit, wherein
the first terminal of the first branch is connected to the first power supply through the first ATS, wherein a first input terminal of the first ATS is configured to connect to the first mains supply, a second input terminal of the first ATS is configured to connect to the first diesel generator, and an output terminal of the first ATS is connected to the first terminal of the first branch; the first terminal of the second branch is connected to the second power supply through the second ATS, wherein a first input terminal of the second ATS is configured to connect to the second mains supply, a second input terminal of the second ATS is configured to connect to the second diesel generator, and an output terminal of the second ATS is connected to an input terminal of the low-voltage power distribution cabinet; and
an output terminal of the low-voltage power distribution cabinet is connected to a first terminal of the uninterruptible power supply circuit, a second terminal of the uninterruptible power supply circuit is connected to an input terminal of the output power distribution cabinet, an output terminal of the output power distribution cabinet is connected to the first terminal of the second branch, and a third terminal of the uninterruptible power supply circuit is connected to the battery.

11. The power supply system according to claim 8, wherein the first power supply comprises a first mains supply and a first diesel generator, and the second power supply comprises a second mains supply and a second diesel generator; and the power supply system further comprises first automatic transfer switching equipment ATS, second automatic transfer switching equipment ATS, a first low-voltage power distribution cabinet, a first output power distribution cabinet, a first battery, a first uninterruptible power supply circuit, a second low-voltage power distribution cabinet, a second output power distribution cabinet, a second battery, and a second uninterruptible power supply circuit, wherein
the first terminal of the first branch is connected to the first power supply through the first ATS, wherein a first input terminal of the first ATS is configured to connect to the first mains supply, and a second input terminal of the first ATS is configured to connect to the first diesel generator; and the first terminal of the second branch is connected to the second power supply through the second ATS, wherein a first input terminal of the second ATS is configured to connect to the second mains supply, and a second input terminal of the second ATS is configured to connect to the second diesel generator;
an output terminal of the first ATS is connected to an input terminal of the first low-voltage power distribution cabinet, an output terminal of the first low-voltage power distribution cabinet is connected to a first terminal of the first uninterruptible power supply circuit, a second terminal of the first uninterruptible power supply circuit is connected to an input terminal of the first output power distribution cabinet, an output terminal of the first output power distribution cabinet is connected to the first terminal of the first branch, and a third terminal of the first uninterruptible power supply circuit is connected to the first battery; and
an output terminal of the second ATS is connected to an input terminal of the second low-voltage power distribution cabinet, an output terminal of the second low-voltage power distribution cabinet is connected to a first terminal of the second uninterruptible power supply circuit, a second terminal of the second uninterruptible power supply circuit is connected to an input terminal of the second output power distribution cabinet, an output terminal of the second output power distribution cabinet is connected to the first terminal of the second branch, and a third terminal of the second uninterruptible power supply circuit is connected to the second battery.

12. A data center, wherein the data center comprises an air conditioning device and the power supply system according to any one of claims 1 to 11; and
the air conditioning device is configured to perform temperature control for the data center.
